(19) **Europäisches Patentamt**
European Patent Office
Office européen des brevets

(11) **EP 3 244 231 A1**

(12) **EUROPÄISCHE PATENTANMELDUNG**

(43) Veröffentlichungstag:
**15.11.2017 Patentblatt 2017/46**

(51) Int Cl.:
**G01S 13/87** *(2006.01)* **G01S 13/89** *(2006.01)*
**H01Q 21/06** *(2006.01)*

(21) Anmeldenummer: **16001077.3**

(22) Anmeldetag: **12.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HENSOLDT Sensors GmbH**
**82024 Taufkirchen (DE)**

(72) Erfinder:
• **Lutz, Steffen, Dr.-Ing.**
**89081 Ulm (DE)**
• **Mietzner, Jan, Dr.-Ing.**
**89077 Ulm (DE)**
• **Meusling, Askold, Dr.-Ing.**
**83607 Holzkirchen (DE)**

(74) Vertreter: **LifeTech IP**
**Spies & Behrndt Patentanwälte PartG mbB**
**Elsenheimerstraße 47a**
**80687 München (DE)**

(54) **MIMO-ANTENNENANORDNUNG UND EIN VERFAHREN ZUR DREIDIMENSIONALEN RADARBILDGEBUNG**

(57)  Eine MIMO-Antennenanordnung für eine dreidimensionale Radarbildgebung umfasst eine erste Sendeantennengruppe (110), eine zweite Sendeantennengruppe (120) und eine Empfangsantennengruppe (130). Die erste Sendeantennengruppe (110) umfasst zumindest N Sendeantennen, die entlang einer ersten Linie (210) gleichförmig mit einem maximalen Senderabstand (d1) aufgereiht sind. Die zweite Sendeantennengruppe (120) umfasst zumindest N Sendeantennen, die entlang einer zweiten Linie (220) gleichförmig mit dem maximalen Senderabstand (d1) aufgereiht sind. Die Empfangs-antennengruppe (130) umfasst M Empfangsantennen, die entlang zumindest einer dritten Linie (230) gleichförmig mit einem maximalen Empfängerabstand (d2) aufgereiht sind. Zwischen den Empfangsantennen und den Sendeantennen der ersten Sendeantennengruppe (110) ist ein Mindestabstand (d3) entlang der ersten Linie (210) ausgebildet . Außerdem ist zwischen den Empfangsantennen und den Sendeantennen der zweiten Sendeantennengruppe (120) ebenfalls der Mindestabstand (d3) entlang der zweiten Linie (220) ausgebildet.

Fig. 1A

EP 3 244 231 A1

**Beschreibung**

Die vorliegende Erfindung bezieht sich auf eine Antennenanordnung, ein Verfahren zur dreidimensionalen (3D) Radarbildgebung und insbesondere auf Multiple-In Multiple-Out (MIMO)- Antennenanordnungen für hochauflösende 3D Radarbildgebung.

Hintergrund

Im Vergleich zu optischen Sensoren zeichnen sich Radarsensoren durch Allwetterfähigkeit, Penetrationseigenschaften und Einsatzfähigkeit bei Tag und Nacht aus und werden daher heutzutage für verschiedenste Anwendungen in den Bereichen Zielobjekterfassung, Bildgebung sowie zur Fernerkundung eingesetzt. Ein inhärenter Nachteil im Vergleich zu optischen Sensoren ist jedoch eine geringere Winkel- bzw. Querauflösung, welche durch die Größe der Antennenfläche (Apertur) und die verwendete Wellenlänge bestimmt wird. Bei bildgebendem Radar wird z.B. die Umgebung in Form eines zwei- oder dreidimensionalen Verlaufs der empfangenen Rückstreuleistung dargestellt. Dabei erfordert die Darstellung kleiner Objekte eine hohe Auflösung, um (i) einen hohen Detailgrad zu erreichen und (ii) den Kontrast gegenüber dem Hintergrund (Clutter) zu erhöhen.

Dank der Entwicklung der digitalen Signalverarbeitung in den letzten Jahren lässt sich der Nachteil der geringeren Querauflösung (teilweise) durch intelligente Algorithmen kompensieren. Letztlich wird dabei Funktionalität aus dem Hochfrequenz (HF)-Bereich in die digitale Domäne verschoben. Insbesondere ermöglicht das sogenannte Multiple-In Multiple-Out (MIMO)-Prinzip eine Verbesserung der Querauflösung mittels einer künstlichen Vergrößerung der Apertur. Bei gleichzeitig großer Signalbandbreite, die die resultierende Entfernungsauflösung bestimmt, können somit hochaufgelöste 3D-Bilder der Umgebung bei gleichzeitig kompakter Bauweise des Radars erzielt werden.

Das MIMO-Prinzip zur virtuellen Aperturvergrößerung ist in der HF-Technik bekannt. Sehr häufig werden jedoch lediglich eindimensionale MIMO-Antennenarrays betrachtet (z.B. zur 2-dimensionalen Bildgebung in Azimut- und Entfernungsrichtung). Zweidimensionale MIMO-Arrays sind beispielsweise in Prechtel, U.; Meenakshisundaram, V.; Schoenlinner, B.; Ziegler, V.; Feldle, H.-P.; Meusling, A.: "Short-Range MIMO Radar System Considerations", Antennas and Propagation (EUCAP), 2012 6th European Conference on, pp. 1742-1745, und in Spreng, T.; Prechtel, U.; Schonlinner, B.; Ziegler, V.; Meusling, A.; Siart, U.: UWB Near-Field MIMO Radar: Calibration, Measurements and Image Reconstruction, Radar Conference (EuRAD), 2013 European, pp. 33-36 beschrieben.

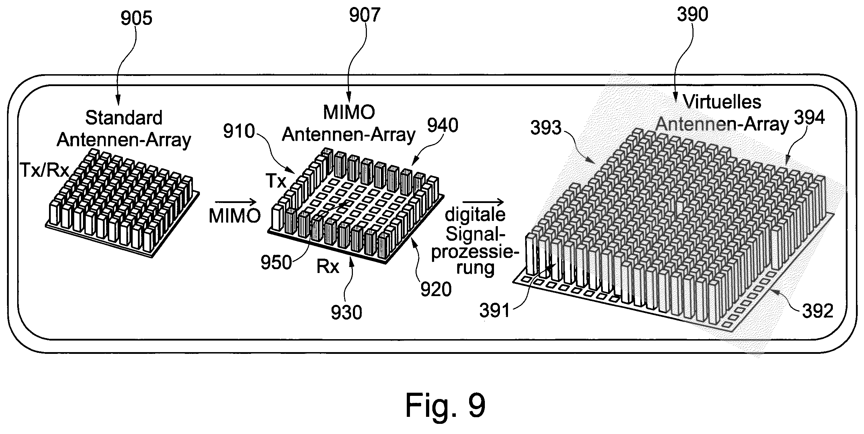

**Fig. 9** zeigt zwei konventionelle Antennenanordnungen, ein Standard-Array 905 und ein MIMO-Array 907, und veranschaulicht das MIMO-Prinzip. Das Standardarray 905 umfasst eine Vielzahl von Antennenelementen, die quadratisch angeordnet sind. Die Antennenelemente können beispielsweise als ein Array von 9x9 Antennenelementen angeordnet sein und jeweils einen Sendeempfänger (Transceiver) Tx/Rx (Kombination aus Sender und Empfänger) umfassen. Das Antennenarray 907 ist ein zweidimensionales MIMO-Array mit Antennenelementen, die an Seitenkanten eines Quadrates reihenförmig angeordnet sind, wobei Sender Tx und Empfänger Rx an verschiedenen Seitenkanten angeordnet sind. Beispielsweise ist eine erste Sendergruppe 910 an einer Seitenkante des Quadrates und gegenüberliegend dazu eine zweite Sendergruppe 920 angeordnet. Ebenso sind eine erste Empfängergruppe 930 und eine zweite Empfängergruppe 940 an gegenüberliegenden Seiten des Quadrates angeordnet, und zwar derart, dass die Empfängergruppen 930, 940 zusammen mit den Sendergruppen 910, 920 das Quadrat bilden. Im Inneren des quadratisch angeordneten Antennenarrays 907 ist ein Freiraum 950 ausgebildet, in welchem sich keine Antennenelemente befinden.

Die so gebildete Antennenanordnung kann beispielsweise dem MIMO-Prinzip folgend derart betrieben werden, dass die Antennenelemente der Sendergruppen 910, 920 gemäß dem Zeitmultiplexverfahren nacheinander angeregt werden (nicht gleichzeitig) und die ausgesendeten Signale von allen Empfängern der ersten und zweiten Empfängergruppen 930, 940 empfangen werden. Zu einer bestimmten Zeit sendet immer nur ein Sender, so dass eine Auswerteeinheit die Empfangssignale klar einem Sender zuordnen kann.

Das auf der rechten Seite der Fig. 9 dargestellte virtuelle Antennenarray 390 ist eine äquivalente Darstellung des MIMO-Antennenarrays 907 in dem Sinn, dass das virtuelle Antennenarray eine Vielzahl von Empfangsantennen darstellt, die ein Signal von nur einer Sendeantenne empfangen und das gleiche Resultat liefern, wie das MIMO-Antennenarray 907.

Das virtuelle Antennenarray 390 umfasst vier Quadranten mit einem ersten Quadrantenarray 391, einem zweiten Quadrantenarray 392, einem dritten Quadrantenarray 393 und einem vierten Quadrantenarray 394. Das erste Quadrantenarray 391 wird beispielsweise derart erzeugt, dass zunächst ein erster Sender der ersten Sendergruppe 910 ein Signal aussendet, welches durch alle Empfänger der zweiten Empfängergruppe 930 empfangen wird. Das entspricht einer Reihe von virtuellen Antennenelementen in dem ersten Quadrantenarray 391. Zeitlich danach wird ein zweiter Sender der ersten Sendergruppe 910 ein Signal aussenden, welches wiederum von allen Empfangsantennen der ersten Empfängergruppe 930 empfangen wird und somit einer zweiten Reihe in dem ersten Quadrantenarray 391 entspricht. Dieses Schema wird fortgesetzt, bis das erste Quadrantenarray 391 der virtuellen Antennen erzeugt ist. In gleicher Weise werden die anderen Quadrantenarrays 392, 393, 394 erzeugt. Beispielsweise entspricht das dritte Quadrantenarray 393 den Empfangsantennen der zweiten Empfängergruppe 940, die Signale von der ersten Sendergruppe 910 empfangen. Das zweite Quadrantenarray 392 entspricht den Empfangsantennen der ersten Empfängergruppe 930, die Signale von der zweiten Sendergruppe 920 empfangen.

Ein Vergleich des virtuellen Arrays 390 mit dem konventionellen Standard-Array 905 zeigt, dass das MI-MO-Prinzip eine Aperturverdopplung in zwei Dimensionen ermöglicht, obwohl das MIMO-Array 907 die gleichen äußeren Abmessungen aufweist wie das Standard-Array 905. Daraus ergibt sich eine verbesserte Querauflösung bei gleichzeitig kompakter Bauweise. Des Weiteren ist das MI-MO-Array 907 dünn besetzt und eröffnet somit neuen Bauraum im Zentrum der Anordnung (im Freiraum 950), der z.B. für weitere Sensoren oder Kommunikationseinheiten genutzt werden kann.

Die bekannten Designs 905, 907 beinhalteten jedoch im Allgemeinen eine mehrdeutige Winkeldarstellung, d.h. es treten sog. Grating-Lobes im Bereich des vorderen Halbraums zwischen +/- 90° in Azimut und Elevation auf. Dies kann in der Praxis Falschziele im relevanten Sichtbereich (Field of View, FoV) des Radars erzeugen. Des Weiteren beinhalten das Design 907 Lücken im virtuellen Antennenarray, die mittels räumlicher Interpolationsverfahren beseitigt werden müssen. Außerdem kommt es beim Design 907 aufgrund der speziellen Antennenanordnung zu einer Verkopplung zwischen Sende- und Empfangsantennen. Dies kann insbesondere im Falle von frequenzmodulierten kontinuierlichen Wellenformen zu unerwünschten Störungen führen.

Die Verwendung des Zeitmultiplexbetriebs erschwert außerdem die Dopplerauswertung im Falle bewegter Ziele bzw. statischer Szenarien, die von einer bewegten Plattform aus erfasst werden sollen. Eine bekannte Methode zur Dopplerauswertung mittels sog. redundanter virtueller Antennen-Elemente ist in Schmid, C.M.; Feger, R.; Pfeffer, C.; Stelzer, A.: Motion Compensation and Efficient Array Design for TDMA FMCW MIMO Radar Systems, Antennas and Propagation (EUCAP), pp. 1746 - 1750 beschrieben und ist exemplarisch auf zweidimensionale MIMO-Arrays angewendet. Aber auch diese Antennenanordnung erreicht kein gleichförmiges, lückenloses, zweidimensionales virtuelles Array. Ebenso bietet es keine Lösung für die Sende- und Empfangsantennen-Verkopplung.

In US 8,570,210 B1 ist eine weitere Antennenanordnung offenbart, die das MI-MO-Prinzip nutzt, aber nur zwei Sendeantennen aufweist und das virtuelle Array nur eindimensional ist. Die Sender nutzen orthogonale Signal (z.B. orthogonale Codes). Relativbewegungen werden aber auch hier nicht berücksichtigt.

Daher besteht ein Bedarf nach alternativen Antennenanordnungen, welche die oben genannten Probleme vermeidet.

Zusammenfassung

Die oben genannte Aufgabe wird durch eine MI-MO-Antennenanordnung nach Anspruch 1 und ein Verfahren nach Anspruch 14 gelöst. Die abhängigen Ansprüche beziehen sich auf vorteilhafte Weiterbildungen der MIMO-Antennenanordnung nach Anspruch 1.

Die vorliegende Erfindung bezieht sich auf eine MIMO-Antennenanordnung, die für eine dreidimensionale Radarbildgebung geeignet ist. Die MIMO-Antennenanordnung umfasst eine erste Sendeantennengruppe, eine zweite Sendeantennengruppe und eine Empfangsantennengruppe. Die erste Sendeantennengruppe umfasst zumindest N Sendeantennen, die entlang einer ersten Linie gleichförmig mit einem maximalen Senderabstand aufgereiht sind. Die zweite Sendeantennengruppe umfasst zumindest N Sendeantennen, die entlang einer zweiten Linie gleichförmig mit dem maximalen Senderabstand aufgereiht sind. Die Empfangsantennengruppe umfasst M Empfangsantennen, die entlang zumindest einer dritten Linie gleichförmig mit einem maximalen Empfängerabstand aufgereiht sind. Zwischen den Empfangsantennen und den Sendeantennen der ersten Sendeantennengruppe ist ein Mindestabstand entlang der ersten Linie ausgebildet. Zwischen den Empfangsantennen und den Sendeantennen der zweiten Sendeantennengruppe ist ebenfalls der Mindestabstand entlang der zweiten Linie ausgebildet.

Im Rahmen der vorliegenden Erfindung sollen die folgenden Definitionen/Festlegungen genutzt werden. Eine MIMO-Antennenanordnung ist eine Antennenordnung, die nach dem zuvor beschriebenen MIMO-Prinzip arbeitet, wobei die im Folgenden genannten Antennenanordnungen MIMO-Antennenanordnungen sein sollen, auch wenn die nicht immer erwähnt ist. Das MI-MO-Prinzip ist dabei nicht auf das Zeitmultiplexverfahren beschränkt, sondern kann allgemeine orthogonale Signale verwenden. Es können beliebige Multiplexverfahren genutzt werden, die insbesondere allgemeine orthogonale Signale verwenden (z.B. Frequenzmultiplexverfahren im Frequenzbereich, orthogonale Modulationsverfahren wie OFDM, CDMA oder andere Verfahren).

Die Sendeantennen sind ausgebildet, um Sendesignale auszusenden (bei einer entsprechenden Anregung), und die Empfangsantennen sind ausgebildet, um von allen Sendeantennen die Sendesignale (oder deren Reflexionen an Objekten) zu empfangen und an eine Auswerteeinheit weiterzuleiten. Die Gesamtzahl der Sendeantennen wird mit T und die Gesamtzahl der Empfangsantennen wird mit R bezeichnet. Der Mindestabstand besagt, dass keine Sendeantenne näher an einer der Empfangsantennen ist, und zwar gemessen entlang der ersten oder zweiten Linie. Beispielsweise kann der Mindestabstand mindestens die Hälfte vom maximalen Senderabstand sein, er kann aber auch größer gewählt werden. Je größer dieser Mindestabstand gewählt wird, um so mehr können die Sendeantennen von den Empfangsantennen entkoppelt werden. Wenn der Mindestabstand beider Sendeantennengruppen gleich gewählt wird, kommt es nicht zu den Versetzungen im virtuellen Array, wie sie in der Fig. 9 zu sehen sind.

Die Gleichförmigkeit des virtuellen Arrays ermöglicht zudem die Anwendung von Standardverfahren zur digitalen Strahlformung. Außerdem wird eine hohe Entkopplung zwischen Sende- und Empfangsantennen erreicht, wodurch ein störungsärmerer Betrieb möglich wird.

Der maximale Senderabstand und der maximale Empfängerabstand definieren lediglich Obergrenzen. Daher brauchen nicht zwingenderweise alle Sende/Empfänger einen gleichen Abstand aufweisen. Die Positionen der einzelnen Sendeantennen und Empfangsantennen (oder deren Abstandsangaben) sollen nicht so strikt ausgelegt werden, dass die Beziehungen mathematisch genau einzuhalten sind. Vielmehr soll eine Toleranzbreite von ± 10% oder ± 20% oder ±50% von den definierten Positionen/Abständen von den Definitionen miterfasst sein.

Der Abstand zwischen zwei Linien oder Gruppen ist im Allgemeinen nicht eindeutig definiert. Im Rahmen der vorliegenden Erfindung wird der Abstand zwischen einer Antennengruppe und einer weiteren Antennengruppe beispielsweise dadurch definiert, dass die einzelnen Antennenelemente der jeweiligen Antennengruppe diese Abstände aufweisen. Beispielsweise wird der Abstand zwischen der ersten Sendeantennengruppe und der zweiten Sendeantennengruppe dadurch gemessen, dass in einer fortlaufenden Nummerierung der einzelnen Sendeantennen in den Sendegruppen (in einer bestimmten Richtung) der Abstand zwischen der ersten Sendeantenne aus der einen Gruppe und der ersten Sendeantenne aus der zweiten Gruppe gemessen wird. Gleiches kann für die anderen Sendeantennen analog durchgeführt werden. Ebenso ist es möglich, den Abstand der Antennengruppen als den maximalen oder minimalen Abstand zwischen einzelnen Antennen zu definieren.

Bei weiteren Ausführungsbeispielen sind die Sendeantennen ausgebildet, um Sendesignale mit einer Wellenlänge λ zu senden, und der maximale Senderabstand und/oder der maximale Empfängerabstand weist einen Wert von maximal Ä/2 oder einen Wert in einem Bereich zwischen λ/2 bis λ auf. Der Wert kann beispielsweise bis auf eine Fehlertoleranz von ± 30% bestimmt sein. Ein Vorteil dieses Ausführungsbeispiels besteht darin, dass eine eindeutige Winkeldarstellung möglich ist und dass das Erzeugen von Falschzielen im vorderen Sichtfeld des Radars verhindert wird. Gleichzeitig wird, wenn der maximale Senderabstand für alle Sendeantennen und der maximale Empfängerabstand für alle Empfangsantennen eingenommen wird, ein gleichförmiges virtuelles Array maximaler Ausdehnung und somit maximaler Auflösung erreicht, ohne dass es zu Mehrdeutigkeiten kommt. Der Empfängerabstand definiert dabei die Auflösung des virtuellen Arrays beispielsweise in der horizontalen Richtung und der Senderabstand definiert die Auflösung in der vertikalen Richtung.

Bei der Nutzung eines Koordinatensystems mit einer x-Achse und einer y-Achse, die im Wesentlichen orthogonal aufeinander stehen, verlaufen bei weiteren Ausführungsbeispielen die erste Linie und die zweite Linie im Wesentlichen parallel zur y-Achse und die dritte Linie im Wesentlichen parallel zur x-Achse, so dass alle Sendeantennen jeweilige y-Werte aufweisen, die um den Mindestabstand größer sind als der gemeinsame y-Wert der Empfangsantennen. Ein Vorteil dieses Ausführungsbeispiels besteht darin, dass ein gleichförmiges virtuelles Array erreicht wird, welches eine rechteckige Form aufweist mit einer gleichen Auflösung in beiden Richtungen.

Bei weiteren Ausführungsbeispielen umfasst die Antennenanordnung eine weitere Empfangsantennengruppe mit zumindest M weiteren Empfangsantennen, die entlang einer vierten Linie aufgereiht sind. Die weitere (oder zweite) Empfangsantennengruppe kann parallel zur ersten Empfangsantennengruppe in einem Empfangsantennengruppenabstand von maximal N*d1 verlaufen (wenn d1 der maximale Senderabstand ist). Ein Vorteil dieses Ausführungsbeispiels besteht darin, dass eine Aperturverdopplung auch senkrecht zu den Empfangsantennen möglich ist (beispielsweise in der y-Richtung in einem x,y-Koordinatensystem).

Bei weiteren Ausführungsbeispielen verläuft die erste Sendeantennengruppe parallel zur zweiten Sendeantennengruppe in einem Sendeantennengruppenabstand von maximal M*d2 (wenn d2 der maximale Empfängerabstand ist). Ein Vorteil dieser Anordnung ist die Lückenlosigkeit im virtuellen Array. Im Vergleich zu der konventionellen Antennenanordnung aus der Fig. 9 kann beispielsweise ein horizontaler Versatz der Sendegruppen bzgl. der ersten Linie bzw. der zweiten Linie um die Hälfte des maximalen Empfängerabstands gewählt werden (bis auf die genannte +/- Toleranz).

Außerdem kann ein Abstand von der ersten Linie zu einer m-ten Empfangsantenne (gemessen parallel zur dritten Linie) beispielsweise maximal $(k_m+1/2)*d2$ sein, wobei $k_m$ eine für die m-te Empfangsantenne spezifische ganze Zahl ist. Die ganze Zahl $k_m$ kann jedoch beliebig gewählt werden. Ein Vorteil dieses Ausführungsbeispiels besteht darin, dass eine Entkopplung zwischen den Senderantennen und Empfangsantennen verbessert werden kann. Insbesondere, wenn die ganze Zahl $k_m$ groß genug gewählt wird, entkoppeln die Senderantennen vollständig von den Empfangsantennen. Außerdem wird gleichzeitig eine hohe Gleichmäßigkeit des virtuellen Arrays erreicht.

Bei weiteren Ausführungsbeispielen ist ein Abstand von der dritten Linie zu einer n-ten Sendeantenne (gemessen parallel zur ersten oder parallel zur zweiten Linie) maximal $(l_n+1/2)*d1$, wobei $l_n$ eine für die n-te Sendeantenne spezifische ganze Zahl ist. Die ganze Zahl $l_n$ kann jedoch beliebig gewählt werden. Diese Beziehung trifft für alle Sendeantennen zu, unabhängig davon, ob sie der ersten oder zweiten Sendeantennengruppe angehören. Wenn nur eine Empfangsantennengruppe (eine Zeile) genutzt wird, braucht das diskrete Raster $(l_n+1/2)*d1$ nicht genutzt zu werden, so dass dieser Abstand beispielsweise c*d1 (c beliebig) sein kann. Ein Vorteil dieses Ausführungsbeispiels besteht darin, dass die Entkopplung zwischen den Empfängerantennen und den Senderantennen verbessert wird, wobei gleichzeitig ein hohes Maß an Gleichmäßigkeit des virtuellen Arrays erreicht wird. Der Grad der Entkopplung kann beispielsweise durch eine Wahl der ganzen Zahl $l_n$ erreicht werden, je größer diese ganze Zahl gewählt wird, umso höher ist auch die Entkopplung der Empfangsantennen von den Senderantennen.

Bei weiteren Ausführungsbeispielen umfasst die Antennenanordnung zumindest eine zusätzliche Empfangsantenne, die entlang der dritten Linie und/oder entlang der vierten Linie seitlich neben einer der Empfangsantennen mit dem Senderabstand angeordnet ist. Sie sind somit in die y-Richtung versetzt zu den Empfangsantennen angeordnet. In diesem Fall kann die erste Sendeantennengruppe parallel zur zweiten Sendeantennengruppe in einem Sendeantennengruppenabstand von maximal $(M-1)*d2$ verlaufen. Ein Vorteil dieses Ausführungsbeispiels besteht darin, dass eine Berücksichtigung (z.B. im Falle des Zeitmultiplexverfahrens) von bewegten Zielen möglich ist und dadurch unscharfe Bilder, deren Unschärfe aufgrund einer relativen Bewegung zwischen den Zielen (oder Objekten) und der Antennenanordnung verursacht werden, korrigiert werden können.

Bei weiteren Ausführungsbeispielen umfasst die Antennenanordnung eine oder mehrere passive Antennenelemente, die mit dem maximalen Senderabstand oder dem maximalen Empfängerabstand seitlich neben einer der Sendeantennen oder seitlich neben einer der Empfangsantennen angeordnet sind. Die Gesamtzahl der passiven Antennenelemente wird mit P bezeichnet. Beispielsweise können zwischen zwei passiven Antennenelementen eine oder mehrere Sendeantennen oder eine oder mehrere Empfangsantennen angeordnet sein. Passive Antennenelemente können beispielsweise Sendeantennen oder auch Empfangsantennen sein, die sich baulich nicht notwendigerweise von den anderen Antennen unterscheiden. Sie werden aber nicht angesteuert, so dass sie keine Sendesignale aussenden bzw. Sendesignale aktiv empfangen und weiterleiten. Ein Vorteil von dieser Vorgehensweise besteht darin, dass es damit möglich wird, das Antennendiagramm (z.B. die Abstrahlcharakteristik) sowohl in dem Azimut als auch in der Elevation zu optimieren. Die passiven Antennen bewirken, dass alle Antennenelemente, wie sie zuvor definiert wurden, sich genauso verhalten wie innere oder interne Antennenelemente und nicht wie Randantennenelemente.

Bei weiteren Ausführungsbeispielen ist jede Sendeantenne entlang der ersten Linie und entlang der zweiten Linie zwischen zwei passiven Antennenelementen angeordnet. Jedes Antennenelement kann (entlang der dritten Linie und/oder entlang der ersten und zweiten Linie) zwischen zwei passiven Antennenelementen angeordnet sein. Alle Sendeantennen einer Gruppe können beispielsweise zwischen zwei passiven Antennenelementen angeordnet sein. Passive Antennenelemente sind beispielsweise am äußeren Rand der Gruppen angeordnet, so dass keine passiven Antennenelemente zwischen zwei Sendeantennen angeordnet sind.

Bei weiteren Ausführungsbeispielen sind die Sendeantennen der ersten Sendeantennengruppe und/oder der zweiten Sendeantennengruppe als Patch-Antennen mit einem jeweiligen Phasenzentrum ausgebildet, wobei sich die Phasenzentren der jeweiligen Patch-Antennen an den Positionen der ursprünglichen Sendeantennen sich befinden. Ein Vorteil dieses Ausführungsbeispiels besteht in einer senderseitigen Vorfokussierung (in Azimut- und/oder Elevation), so dass mit einer geringeren Sendeleistung die gleichen Ergebnisse erzielbar sind.

Bei weiteren Ausführungsbeispielen ist zwischen der ersten Sendeantennengruppe und der Empfangsantennengruppe und/oder zwischen der zweiten Sendeantennengruppe und der Empfangsantennengruppe ein Abschirmelement ausgebildet, um ein direktes Empfangen der durch die Sendeantennen ausgestrahlten Signale durch die Empfangsantennen zu verhindern oder zu unterdrücken. Hierdurch kann eine zusätzliche Entkopplung erreicht werden.

Bei weiteren Ausführungsbeispielen umfasst die Antennenanordnung eine Steuereinheit, wobei die Steuereinheit ausgebildet ist, um die Sendeantennen über ein Multiplexverfahren anzusteuern und die Empfangsantennen ausgebildet sind, um Sendesignale von allen Sendeantennen oder Reflexionen an Objekten zu empfangen.

Optional kann die Steuereinheit ausgebildet sein, um ein Zeitmultiplexverfahren zum Aussenden der Sendesignale zu nutzen und basierend auf Empfangssignalen von der zumindest einen zusätzlichen Empfangsantenne und/oder einer weiteren Empfangsantenne entlang der Reihe von Empfangsantennen, eine relative Bewegung des Objektes zur Antennenanordnung festzustellen, so dass eine Bewegungskompensation ermöglicht wird. Die zumindest eine zusätzliche Empfangsantenne und/oder die weitere Empfangsantenne stellen im virtuellen Array (räumlich) überlappende Positionen dar, so dass zu verschiedenen Zeiten des Zeitmultiplexverfahrens die überlappenden Positionen mehrfach erfasst werden (zeitliche Brücke) und so eine Bewegungsdetektion möglich wird.

Die vorliegende Erfindung bezieht sich auf ein Verfahren zur dreidimensionalen Radarbildgebung für ein Objekt oder die Umgebung unter Nutzung einer zuvor beschriebenen Antennenanordnung. Das Verfahren umfasst die Schritte: Senden von orthogonalen Sendesignalen durch die Sendeantennen, Empfangen von Reflexionssignalen der orthogonalen Sendesignale, die von dem Objekt oder der Umgebung reflektiert wurden, und Auswerten der empfangenen Reflexionssignale, um ein dreidimensionales Bild von dem Objekt oder der Umgebung zu erzeugen. Im Rahmen der vorliegenden Erfindung sollen unter orthogonale Signale, alle Signale verstanden werden, die in einem vorgegebenen Zeitraum parallel oder simultan übertragen werden können, ohne dass sich die Signale gegenseitig beeinflussen oder stören. Die Orthogonalität der Signale kann sich dabei auf den Zeitbereich (z.B. durch ein Zeitmultiplexverfahren), auf den Frequenzbereich (z.B. durch ein Frequenzmultiplexverfahren), auf die Kodierung (z.B. durch orthogonale Codes), oder auf ein anderes Multiplexverfahren beziehen.

Dieses Verfahren kann ebenfalls in Form von Anweisungen in Software oder auf einem Computerprogrammprodukt implementiert oder gespeichert sein, wobei die gespeicherten Anweisungen in der Lage sind, die Schritte nach dem Verfahren auszuführen, wenn das Verfahren auf einem Prozessor (z.B. in einem Steuergerät eines Empfangsmoduls oder einer Radaranlage) läuft. Daher bezieht sich die vorliegende Erfindung ebenfalls auf ein Computerprogrammprodukt mit darauf gespeichertem Software-Code (Softwareanweisungen), die ausgebildet sind, um eines der zuvor beschriebenen Verfahren auszuführen oder Funktionen bereitzustellen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann. Das Verfahren kann auch durch eine anwendungsspezifische Hardware, insbesondere eine FPGA-Einheit (FPGA=field programmable gate array = benutzerspezifisch programmierbare Logikschaltung), ausgeführt werden, wenn die anwendungsspezifische Hardware an die MIMO-Antennenanordnung koppelt, um diese zu steuern.

Die vorliegende Erfindung bezieht sich auch auf eine Antennenanordnung, die für eine dreidimensionale Radarbildgebung geeignet ist. Die Antennenanordnung umfasst eine erste Sendeantennengruppe, eine zweite Sendeantennengruppe und eine Empfangsantennengruppe. Die erste Sendeantennengruppe umfasst zumindest N Sendeantennen, die entlang einer ersten Linie gleichförmig mit einem maximalen Senderabstand aufgereiht sind. Die zweite Sendeantennengruppe umfasst zumindest N Sendeantennen, die entlang einer zweiten Linie gleichförmig mit dem maximalen Senderabstand aufgereiht sind. Die Empfangsantennengruppe umfasst M Empfangsantennen, die entlang zumindest einer dritten Linie gleichförmig mit einem maximalen Empfängerabstand aufgereiht sind. Die Sendeantennen sind ausgebildet, um Sendesignale mit einer Wellenlänge $\lambda$ zu senden und der maximale Senderabstand und/oder der maximale Empfängerabstand weist einen Wert von maximal $\lambda/2$ oder einen Wert in einem Bereich zwischen $\lambda/2$ bis $\lambda$ auf. Der Wert kann beispielsweise bis auf eine Fehlertoleranz von $\pm$ 30% bestimmt sein.

Ausführungsbeispiele der vorliegenden Erfindung lösen die oben genannte technische Aufgabe durch eine 2-dimensionale Antennenanordnung auf Basis des MIMO-Prinzips. Basierend auf dem theoretischen Framework können gleichmäßige zweidimensionale MIMO-Arrays gezielt entworfen und verbleibende Freiheitsgrade können systematisch betrachtet werden. Wie bereits dargelegt, lassen sich damit insbesondere die folgenden Vorteile erreichen:

(a) Die eindeutige Winkeldarstellung vermeidet das Erzeugen von Falschzielen im FoV des Radars, insbesondere bei elektronischer Strahlschwenkung beim empfangsseitigen digitalen Beamforming (d.h. bei Scanwinkeln ungleich 0° bzgl. Boresight).
(b) Durch das erzeugte lückenlose virtuelle Array erübrigen sich Algorithmen zur räumlichen Interpolation. Die Gleichförmigkeit des virtuellen Arrays ermöglicht zudem die Anwendung von Standardverfahren zur digitalen Strahlformung.
(c) Die erreichbare hohe Entkopplung zwischen Sende- und Empfangsantennen erlaubt einen störungsärmeren Betrieb, insbesondere im Falle von FMCW- Wellenformen.
(d) Die Möglichkeit zur Dopplerverarbeitung erlaubt das Prozessieren von beweglichen Zielen bzw. von statischen Szenarien, die von einer bewegten Plattform aus erfasst werden sollen.

Die vorgeschlagenen Antennenanordnungen lassen sich zudem wie folgt erweitern:

(e) Durch die Verwendung zusätzlicher passiver Antennenelemente können die Antennendiagramme in Azimut und Elevation optimiert werden.
(f) Durch die Verwendung von Multipatch-Antennen kann das Antennendiagramm sendeseitig vorfokussiert werden (in Azimut- und/oder Elevation).

Diese Ziele sind gemäß der vorliegenden Erfindung erreichbar, ohne die Vorteile der Kompaktheit sowie des freien Bauraums aufgrund einer quadratischen Antennenanordnung einzubüßen. Außerdem kann damit im Zeitmultiplexbetrieb eine hochauflösende dreidimensionale Radarbildgebung erreicht werden.

Kurzbeschreibung der Figuren

Die Ausführungsbeispiele der vorliegenden Erfindung werden besser verstanden mit der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.

Fig. 1A,B zeigen eine Antennenanordnung und ein dazugehöriges virtuelles Array gemäß einem Ausführungsbeispiel der vorliegenden Erfindung.

Fig. 2A,B zeigen eine Antennenanordnung mit N=6 (T=12) und M=8 (R=16) für ein physikalisches MIMO-Array und das zugehöriges virtuelle Array gemäß weiterer Ausführungsbeispiele.

Fig. 3A,B    zeigen eine Antennenanordnung mit N=8 (T=16) und M=15 (R=16) mit einer zusätzlichen Empfangsantenne zur Erfassung eines (relativ) bewegten Objektes und das zugehörige virtuelle Array gemäß weiterer Ausführungsbeispiele.

Fig. 4    zeigt eine Graphen-Darstellung des Ausführungsbeispiels der Fig. 3A mit N=8 (T=16) und M=15 (R=16).

Fig. 5A,B    zeigen eine Antennenanordnung mit N=6 (T=12) und M=7 (R=16) mit zwei zusätzlichen Empfangsantennen zur Erfassung eines (relativ) bewegten Objektes und das zugehörige virtuelle Array gemäß weiterer Ausführungsbeispiele.

Fig. 6    zeigt eine Antennenanordnung mit N=6 (T=12) und M=7 (R=16) aktiven Antennenelementen und P=48 passiven Antennenelementen für eine Aperturverdopplung in zwei Dimensionen gemäß weiterer Ausführungsbeispiele.

Fig. 7A,B    zeigt eine Antennenanordnung mit N=6 (T=12) und M=7 (R=16) Antennenelementen mit Vorfokussierung in y-Richtung und einer Aperturverdopplung in zwei Dimensionen gemäß weiterer Ausführungsbeispiele sowie exemplarisch ein Multipatch-Antennenelement.

Fig. 8    zeigt ein Flussdiagramm für ein Verfahren zur 3D Bildgebung gemäß der vorliegenden Erfindung.

Fig. 9    zeigt konventionelle Antennenanordnungen.

## Detaillierte Beschreibung

Ausführungsbeispiele der vorliegenden Erfindung können das MIMO-Prinzip nutzen, um die Erweiterung der Apertur zu erzielen. Die Grundidee des MIMO-Prinzips ist wie folgt. Sendeseitig können orthogonale Signale über T Sendeelemente (Sendeantennen) ausgesendet werden, die von R Empfangselementen (Empfangsantennen) gemeinsam empfangen (z.B. nach einer Reflexion an einem Objekt) und gemeinsam verarbeitet werden. Aufgrund der Orthogonalität sind die einzelnen Sendesignale am Empfänger wieder trennbar. Insbesondere ermöglicht die gemeinsame Verarbeitung der Empfangssignale die Berechnung von Amplituden- und Phasenbeziehungen an T*R Punkten im Raum. Diese Punkte bilden die Elemente eines sog. virtuellen Antennen-Arrays, welches im Vergleich zum tatsächlichen/ physikalischen Antennenarray eine künstlich vergrößerte Apertur aufweist. Dabei ist allerdings eine geschickte Positionierung der einzelnen Sende- und Empfangsantennen unabdingbar. Die sendeseitige Orthogonalität kann im Prinzip auf dreierlei Weise erzielt werden:

(i)    im Zeitbereich (durch Zeitmultiplex, d.h. mittels Durchschalten der N Sendeantennen, so dass jede Sendeantenne ihren eigenen ZeitSchlitz zum Senden zugewiesen bekommt und daher keine wechselseitige Störung auftreten kann),

(ii)    im Frequenzbereich (durch Verwenden verschiedener, nichtüberlappender Frequenzbänder für die einzelnen Sendeantennen),

(iii)    im Signalbereich (durch Verwendung orthogonaler Kodierungsverfahren für die einzelnen Sendeantennen; z.B. nutzt jeder Sender seinen eigenen orthogonalen Code).

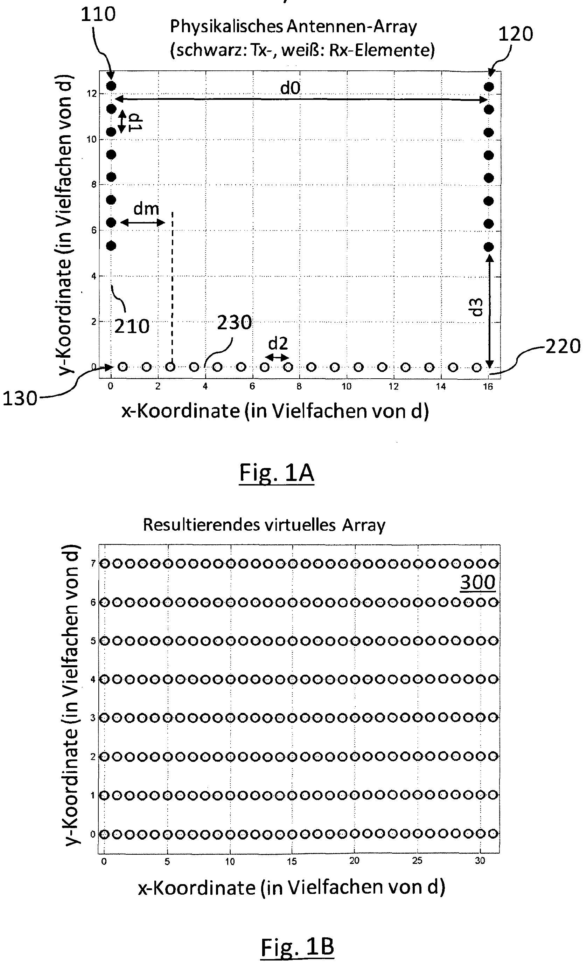

**Fig. 1A** zeigt eine Antennenanordnung nach einem Ausführungsbeispiel der vorliegenden Erfindung, die das MIMO-Prinzip nutzen kann. In dem gezeigten Ausführungsbeispiel ist eine erste Sendeantennengruppe 110 mit N Sendeantennen entlang einer ersten Linie 210 (x=0) gleichförmig mit einem maximalen Senderabstand d1 aufgereiht. Außerdem ist eine zweite Sendeantennengruppe 120 mit N Sendeantennen entlang einer zweiten Linie 220 (x=16) gleichförmig mit dem maximalen Senderabstand d1 aufgereiht. Außerdem ist eine Empfangsantennengruppe 130 mit M Empfangsantennen entlang einer dritten Linie 230 (y=0) gleichförmig mit einem maximalen Empfängerabstand d2 aufgereiht. In der konkreten technischen Ausgestaltung gilt zum Beispiel: N=8 (T=16), M=R=16, und außerdem kann d1=d2=d gewählt werden.

In dem gezeigten Ausführungsbeispiel ist zwischen der ersten Linie 210 und der zweiten Linie 220 ein Abstand

$$d0 \leq M*d2$$

ausgebildet. Außerdem ist zwischen den Sendeantennen der ersten Sendeantennengruppe 110 und den Empfangsantennen der Empfangsantennengruppe 130 ist ein Mindestabstand d3 ausgebildet, und zwischen den Sendeantennen der zweiten Sendeantennengruppe 120 und den Empfangsantennen der Empfangsantennengruppe 130 ist ebenfalls der Mindestabstand d3 ausgebildet. Der Mindestabstand d3 ist dabei zumindest so groß wie d1 oder d2 (z.B. gemessen entlang der ersten oder zweiten Linie 210, 220). Insbesondere kann der Mindestabstand d3 zur ersten Sendeantennengruppe 110 gleich zu dem Mindestabstand d3 zur zweiten Sendeantennengruppe 120 sein (gemessen jeweils von der Empfangsantennengruppe 130 entlang der ersten Linie 210 oder entlang der zweiten Linie 220).

**Fig. 1B** zeigt das dazugehörige virtuelle Antennenarray 300 mit virtuellen Antennen, wenn die Antennenanordnung gemäß dem MIMO-Prinzip betrieben wird (d.h. es handelt sich um ein MIMO-Antennenarray). Das virtuelle Antennenarray 300 weist N Reihen von virtuellen Antennen auf, wobei in jeder Reihe jeweils 2*M virtuelle Antennen aufgereiht sind.

Die Anzahl von Antennenelementen kann sowohl in der ersten Sendeantennengruppe 110 als auch in der zweiten Sendeantennengruppe 120 oder in der Empfangsantennengruppe 130 beliebig gewählt werden. Ein gleichförmiges Array von virtuellen Antennen wird jedoch nur dann erreicht, wenn die Anzahl der Sendeantennen in der ersten Sendeantennengruppe 110 gleich ist zu der Anzahl von Sendeantennen in der zweiten Sendeantennengruppe 120. Wie in dem gezeigten Ausführungsbeispiel sind ferner die erste Linie 210 und die zweite Linie 220 parallel zueinander angeordnet, so dass das virtuelle Array 300 eine gleichförmige Rechteckanordnung darstellt. Auch dies ist nicht zwingend erforderlich, sondern kann entsprechend variiert werden.

Die gezeigte Anordnung ist in der Lage, die oben genannten Kriterien (a) und (b) zu erfüllen, wenn beispielsweise der maximale Senderabstand d1 und/oder der maximale Empfängerabstand d2 maximal $\lambda/2$ ist, wobei $\lambda$ die Wellenlänge der genutzten Radarstrahlung ist. In diesem Fall treten die Winkelmehrdeutigkeiten, d.h. die ersten Grating-Lobes, im Boresight-Betrieb (Azimut-/ Elevationswinkel 0°) bei +/- 180° auf. Bei elektronischer Strahlschwenkung auf +/- 90° tritt die Winkelmehrdeutigkeit dem entsprechend bei -/+ 90° auf, ist also für das FoV des Radars (vorderer Halbraum) unkritisch. Dem entsprechend ist es von Vorteil, für ein zweidimensionales Antennen-Array mit elektronischer Strahlschwenkung über den kompletten vorderen Halbraum einen Elementabstand von $\lambda/2$ in Azimut und Elevation zu wählen.

Im Falle eines MIMO-Arrays bedeutet dies, dass das resultierende virtuelle Array 300 einen gleichförmigen Elementabstand von $\lambda/2$ in zwei Dimensionen aufweisen sollte. Über das sog. Faltungsprinzip kann gezeigt werden, dass dies für die quadratische Antennenanordnungen 907 aus der Fig. 9 dann der Fall ist, wenn die folgenden Bedingungen gleichzeitig erfüllt sind:

(B1)  Die Elementabstände innerhalb der beiden Sendeantennengruppen betragen jeweils $\lambda/2$.

(B2)  Die Elementabstände innerhalb der Empfangsgruppe betragen jeweils $\lambda/2$.

(B3)  An allen Nahtstellen zwischen den vier Teilaperturen (siehe Quadranten 391,..., 394 in Fig. 9) der virtuellen Apertur ergeben sich Abstände von exakt $\lambda/2$ (in beiden Dimensionen); insbesondere enthält das virtuelle Array keine Lücken ($> \lambda/2$).

Um die Bedingung (B3) zu erfüllen, werden die relativen Abstände der einzelnen Sende- und Empfangsantennengruppen geeignet gewählt. Im Beispiel von Fig. 9 ist dies nicht erfüllt, denn im Zentrum der virtuellen Apertur ergibt sich z. B. eine Lücke. Das Ausführungsbeispiel aus der Fig. 1 weist diesen Nachteil nicht auf und erreicht eine physikalische MIMO-Arrayauslegung mit lückenloser, gleichförmiger virtueller Apertur in zwei Dimensionen. Die virtuelle Aperturverdopplung in einer Dimension wird durch die zwei Sendeantennengruppen 110, 120 mit einem gleichförmigen Elementabstand (Senderabstand) d1=d aus jeweils N Elementen erreicht (d.h. T=2*N). Außerdem sind die M Empfangsantenne (R=M) der Empfangsantennengruppe 130 mit gleichförmigem Elementabstand d2=d angeordnet. In einem orthogonalen x,y- Koordinatensystem ist die Empfangsantennengruppe 130 beispielhaft entlang der x-Achse ausgebildet und die Sendeantennengruppen 110, 120 sind senkrecht zur Empfangsantennengruppe 130 entlang der y-Achse angeordnet. Der Abstand d0 zwischen den beiden Sendeantennengruppen 110, 120 beträgt in der Fig. 1A M*d, und die Ausrichtung entlang der x-Achse kann derart erfolgen, dass sich in x-Richtung zu jedem Empfangselement m ($1 \leq m \leq M$) ein Abstand von maximal dm=$(k_m + 1/2)$*d ergibt, wobei $k_m$ eine ganze Zahl ist, die vom Index m des betrachteten Empfangselements abhängt. Die Ausrichtung der Sendeantennengruppen 110, 120 entlang der y-Achse ist beliebig.

Als Ergebnis dieser Anordnung ergibt sich ein virtuelles Antennenarray 300 mit 2*M*N Elementen (d.h. einer virtuellen Aperturverdopplung in x-Richtung). Für den Spezialfall, dass

$$d1 = d2 = d = \lambda/2,$$

ergibt sich wie bereits gesagt eine eindeutige Winkeldarstellung in Azimut und Elevation für elektronische Strahlschwenkung über den gesamten vorderen Halbraum. Falls jedoch die elektronische Strahlschwenkung in Azimutrichtung lediglich einen eingeschränkten Winkelbereich von +/- $\Phi_{max}$ abdeckt, so kann für den Antennenabstand d2 innerhalb der Empfangsgruppe 130 auch ein geeigneter Wert

$$d2 \in [\lambda/2, \lambda]$$

gewählt werden. Der Abstand zwischen den beiden Sendeantennengruppen 110, 120 kann dann M*d2 betragen, und die Ausrichtung der Sendeantennengruppen 110, 120 entlang der x-Achse kann derart erfolgen, dass sich in x-Richtung zu jeder Empfangsantenne m ($1 \leq mm \leq M$) ein Abstand dm von $(k_m + 1/2)$*d2 ergibt.

Falls die elektronische Strahlschwenkung auch in der Elevationsrichtung lediglich einen eingeschränkten Winkelbereich von +/- $\theta_{max}$ abdeckt, so kann für den Elementabstand d1 innerhalb der Sendeantennengruppen 110, 120 auch ein geeigneter Wert

$$d1 \in [\lambda/2, \lambda]$$

gewählt werden. Es ergeben sich hieraus keine weiteren Änderungen für die Arrayauslegung.

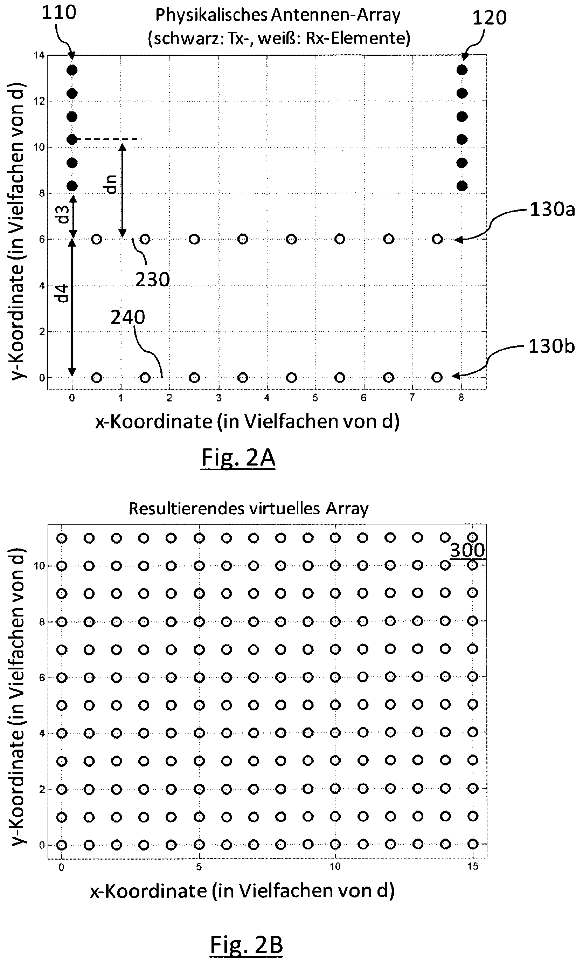

**Fig. 2A** zeigt ein weiteres Ausführungsbeispiel für eine Antennenanordnung. Im Unterschied zu der Antennenanordnung aus der Fig. 1 umfasst die Empfangsantennengruppe 130 jetzt zwei Empfangsantennengruppen: eine erste Empfangsantennengruppe 130a und eine zweite Empfangsantennengruppe 130b. Die erste Empfangsantennengruppe 130a kann genauso ausgebildet sein wie die Empfangsantennengruppe 130 aus der Fig. 1. Ebenso können die erste und zweite Sendeantennengruppe 110, 120 in gleicher Weise ausgebildet sein, wie es in der Fig. 1A beschrieben wurde, wobei hier beispielhaft N=6 (T=12) und M=8 (R=16) gewählt wurde.

Wie auch in der Fig. 1, ist der Abstand zwischen den Sendeantennengruppen 110, 120 zu der ersten Empfangsantennengruppe 130a derart gewählt, dass ein Mindestabstand von d3 eingehalten wird (wobei d3 $\geq$ d1 oder d3 $\geq$ d2 gewählt werden kann). Eine wiederholte Beschreibung ist daher nicht erforderlich. Die weiter ausgebildete zweite Empfangsantennengruppe 130b ist durch einen Abstand d4 von der ersten Empfangsantennengruppe 130a beabstandet. Für den Abstand d4 kann beispielsweise gelten:

$$d4 \leq N*d1 \ .$$

**Fig. 2B** zeigt das zu der Antennenanordnung der Fig. 2A zugehörige virtuelle Array 300 (z.B. für d4=N*d1). Es ist eine rechteckförmige Anordnung mit 2*N Reihen mit je 2*M virtuellen Antennen. Ein Vorteil der in der Fig. 2A gezeigten Ausführungsform besteht darin, dass die Form des virtuellen Arrays 300 flexibler gewählt werden kann. Wenn beispielsweise die Anzahl M der Empfangsantennen in der ersten Empfangsantennengruppe 130a gleich ist zu der Anzahl der Empfangsantennen in der zweiten Empfangsantennengruppe 130b, ergibt sich das gezeigte rechteckförmige Array 300 von virtuellen Antennen. Somit lassen sich durch relativ wenige Sendeantennen Formen für das virtuelle Antennenarray 300 erzeugen, die beispielsweise in y-Richtung ausgedehnter sind als die Antennenanordnung aus der Fig. 1. In der gezeigten speziellen Ausgestaltung wird beispielsweise eine virtuelle Aperturverdopplung in zwei Dimensionen erreicht.

Um das gezeigte gleichförmige virtuelle Array 300 zu erreichen, können folgende Maßnahmen getroffen werden. Die zwei Sendeantennengruppen 110, 120 werden mit einem gleichförmigem Elementabstand d1=d aus jeweils N Sendeantennen (d.h. T=2N) gebildet und die zwei Empfangsantennengruppen 130a, 130b werden ebenfalls mit einem gleichförmigen Elementabstand d2=d aus jeweils M Empfangsantennen (d.h. R=2M) gebildet.

Die Empfangsantennengruppen 130a, 130b können parallel zueinander entlang der x-Achse ausgebildet werden. Die Sendeantennengruppen 110, 120 werden senkrecht zu den Empfangsantennengruppen 130a, 130b und parallel zu einander entlang der y-Achse ausgerichtet. Der Abstand d0 zwischen den beiden Sendeantennengruppen 110, 120 beträgt wieder maximal M·d (oder d0 $\leq$ M*d), und der Abstand d4 zwischen den beiden Empfangsantennengruppen 130a, 130b beträgt wieder maximal N*d (oder d4 $\leq$ N*d). Die Ausrichtung der Empfangsantennengruppen 130a, 130b entlang der y-Achse erfolgt beispielsweise derart, dass sich in y-Richtung zu jedem Sendeelement n ein Abstand dn von maximal $(l_n + 1/2)*d$ ergibt, wobei $l_n$ eine ganze Zahl ist, die vom Index n des betrachteten Sendeelements abhängt. Die Ausrichtung der Sendeantennengruppen 110, 120 entlang der x-Achse kann wieder derart erfolgen, dass sich in x-Richtung zu jedem Empfangselement m ein Abstand dm von maximal $(k_m + 1/2)·d$ ergibt, wobei $k_m$ eine ganze Zahl ist, die vom Index m des betrachteten Empfangselements abhängt.

Wie in der Fig. 2B gezeigt, ergibt sich hieraus ein virtuelles Antennenarray 300 mit (2M)*(2N) Elementen (d.h. einer virtuellen Aperturverdopplung in x- und y-Richtung) und gleichförmigem Elementabstand d (=d1=d2) in beiden Dimensionen (x- und y-Richtung). Für den Spezialfall

$$d = \lambda/2$$

ergibt sich wieder eine eindeutige Winkeldarstellung in Azimut und Elevation für elektronische Strahlschwenkung über den gesamten vorderen Halbraum. Falls wiederum die elektronische Strahlschwenkung in Azimutrichtung lediglich einen eingeschränkten Winkelbereich von +/- $\Phi_{max}$ abdeckt, so kann für den Elementabstand d2 innerhalb der Empfangsgruppe auch ein geeigneter Wert

$$d2 \in [\lambda/2, \lambda]$$

gewählt werden. Der Abstand d0 zwischen den beiden Sendeantennengruppen 110, 120 kann dann M*d2 betragen, und die Ausrichtung der Sendeantennengruppen 110, 120 entlang der x-Achse kann derart erfolgen, dass sich in x-Richtung zu jedem Empfangselement m ein Abstand dm von maximal $(k_m + 1/2)*d2$ ergibt (wie d0 in Fig. 1A). Falls die elektronische Strahlschwenkung in Elevationsrichtung lediglich einen eingeschränkten Winkelbereich von +/- $\theta_{max}$ abdeckt, so kann für den Elementabstand innerhalb der Sendeantennengruppen auch ein geeigneter Wert

$$d1 \in [\lambda/2, \lambda]$$

gewählt werden. Der Abstand d4 zwischen den beiden Empfangsantennengruppen 130a, 130b kann dann maximal N*d1 betragen, und die Ausrichtung der Empfangsantennengruppen 130a, 130b entlang der y-Achse kann derart erfolgen, dass sich in y-Richtung zu jedem Sendeelement n ein Abstand dn von maximal $(l_n + 1/2)*d1$ ergibt.

Bei der Array-Variante aus der Fig. 1A mit einer virtueller Aperturverdopplung in einer Dimension können die Sendeantennengruppen 110, 120 entlang der y-Achse beliebig verschoben werden, ohne dass sich Änderungen für das resultierende virtuelle Array ergeben (abgesehen von einer Phasenverschiebung, die alle virtuellen Elemente gleichermaßen betrifft und die einer translatorischen Verschiebung des virtuellen Arrays im Raum entspricht). Entlang der x-Achse können die Sendeantennengruppen 110, 120 ebenfalls verschoben werden, ohne dass sich Änderungen für das resultierende virtuelle Array 300 ergeben, solange die Sendeelemente in x-Richtung auf dem Raster $(k_m + 1/2)*d$ bleiben (für d2=d). Diese Verschiebung ermöglicht es, eine hohe Entkopplung zwischen den Sendeantennen und den Empfangsantennen zu erreichen.

Bei der Array-Variante aus der Fig. 2A mit einer virtueller Aperturverdopplung in zwei Dimensionen können die Sendeantennengruppen 110, 120 entlang der y-Achse auf dem Raster $(l_n + 1/2)*d$ und/oder entlang der x-Achse auf dem Raster $(k_m + 1/2)*d$ verschoben werden, ohne dass sich Änderungen für das resultierende virtuelle Array 300 ergeben (für d1=d2=d). Diese Freiheitsgrade können auch in Fig. 2A dazu genutzt werden, die Sendeantennengruppen 110, 120 und die Empfangsantennengruppen 130a, 130b räumlich zu trennen, um eine entsprechend hohe Entkopplung zwischen den Sende- und Empfangselementen zu erreichen. In den Ausführungsbeispielen der Fig. 1 und Fig. 2 ist dies bereits ausgenutzt worden, indem die Sendeantennengruppen 110, 120 entlang der y-Achse verschoben wurden. Die aus der räumlichen Trennung der Sende- und Empfangsantennen resultierende Entkopplung kann messtechnisch ermittelt werden und entsprechend an den gewünschten Erfordernissen angepasst werden.

Daher ist mit den speziellen physikalischen MIMO-Arrayauslegungen, wie sie in den Figuren 1 und 2 dargestellt wurden, bereits eine lückenlose, gleichförmige virtuelle Apertur in zwei Dimensionen mit hoher Entkopplung zwischen Sende- und Empfangselementen erreichbar.

Wenn das virtuelle Array 300 im Zeitmultiplexbetrieb generiert wird, gestaltet sich jedoch eine Dopplerverarbeitung von Bewegtzielen bzw. von statischen Szenarien, die von einer bewegten Plattform aus erfasst werden sollen, schwierig, da im Allgemeinen keine zeitlich durchgängige Phasenreferenz verfügbar ist. Abhilfe schaffen hier geeignete räumliche Überlappungen im virtuellen Array 300. Die räumlichen Überlappungen von virtuellen Elementen innerhalb eines Multiplexzyklus führt zu einer mehrmaligen Erzeugung von bestimmten virtuellen Elementen (Antennen). Auf diese Art ergeben sich zeitliche Brücken zwischen den verschiedenen physikalischen Sendeantennen, die für eine zeitlich durchgängige Phasenreferenz ausgenutzt werden können. Das Array-Design kann derart gestalten werden, dass über die entstehenden "Brücken" alle T Sendeelemente (und somit alle T Zeitschlitze eines Multiplexzyklus) miteinander verbunden werden.

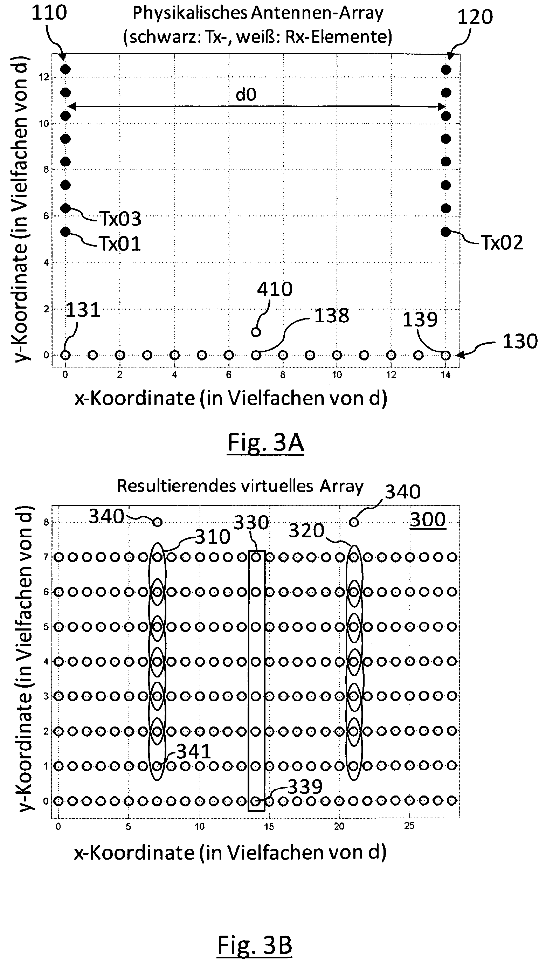

**Fig. 3A** zeigt ein Ausführungsbeispiel der vorliegenden Erfindung, welches zur Erfassung und Berücksichtigung solcher Relativbewegungen zwischen der Antennenanordnung und dem entsprechenden Objekt geeignet ist, wobei in dem gezeigten Ausführungsbeispiel beispielhaft folgende Werte genommen wurden:

$$N=8 \ (T=16) \ \text{und} \ M=15 \ (R=16).$$

Die Empfangsantennen sind wiederum reihenförmig von einer ersten Empfangsantenne 130a bis zu einer letzten Empfangsantenne 139 angeordnet. Das gezeigte Ausführungsbeispiel unterscheidet sich von dem in der Fig. 1 gezeigten Ausführungsbeispiel dadurch, dass eine zusätzliche Empfangsantenne 410 seitlich neben der Empfangsantennengruppe 130 angeordnet ist (d.h. R=M+1). Außerdem ist in der gezeigten Antennenanordnung der Sendergruppenabstand d0 zwischen der ersten Sendeantennengruppe 110 und der zweiten Sendeantennengruppe 120 um einen Wert d2 (maximaler Empfängerabstand) verringert, so dass jetzt Folgendes gilt:

$$d0 \leq (M-1)*d2 \ .$$

In einem (orthogonalen) x,y-Koordinatensystem sind beispielsweise beide Sendeantennengruppen 110, 120 entlang der x-Achse um jeweils d2/2 "nach innen" verschoben, so dass alle Sendeantennen der ersten Sendeantennengruppe 110 senkrecht oberhalb der ersten Empfangsantenne 131 und alle Sendeantennen der zweiten Sendeantennengruppe 120 oberhalb der letzten Empfangsantenne 139 angeordnet sind. Dies muss jedoch nicht zwingend der Fall sein. Vielmehr können die Sendeantennengruppen 110, 120 und Empfangsantennengruppe 130 relativ zueinander um ganzzahlige Vielfache der Sender-bzw. Empfängerabstände verschoben werden (siehe Beschreibung zu Fig. 1).

Die zusätzliche Empfangsantenne 410 ist beispielhaft neben der achten Empfangsantenne 138 angeordnet, und zwar in einem maximalen Senderabstand d1. In dem gezeigten Ausführungsbeispiel ist die zusätzliche Empfangsantenne 410 seitlich auf der Seite zu den Sendeantennen der ersten Sendeantennengruppe 110 bzw. der zweiten Sendeantennengruppe 120 angeordnet. Die zusätzliche Empfangsantenne 410 kann aber auch auf der gegenüberliegenden Seite der aufgereihten Empfangsantennen angeordnet werden.

Die Sendeantennen (Tx) wurden beispielhaft wie folgt durchnummeriert:

*erste Sendeantennengruppe 110: zweite Sendeantennengruppe 120:*

| | |
|---|---|
| Tx01 | Tx02 |
| Tx03 | Tx04 |
| Tx05 | Tx06 |
| Tx07 | Tx08 |
| Tx09 | Tx10 |
| Tx11 | Tx12 |
| Tx13 | Tx14 |
| Tx15 | Tx16 |

Alle weiteren Merkmale können wie in der in Fig. 1 ausgebildet sein, so dass eine wiederholte Beschreibung nicht erforderlich ist.

Fig. 3B zeigt das zu der Antennenanordnung der Fig. 3A zugehörige virtuelle Array 300. Das virtuelle Antennenarray 300 hat eine virtuelle Aperturverdopplung in x-Richtung, einen gleichförmigen Elementabstand d (d=d1=d2) in beiden Dimensionen (x- und y-Richtung) und außerdem mehrfach erzeugte virtuelle Elemente. Die zusätzliche Empfangsantenne 410 führt dazu, dass in dem virtuellen Antennenarray 300 bei der Verwendung des Zeitmultiplexverfahrens "zeitliche" Brücken 310, 320 ausgebildet werden, die Verbindungen zwischen jeweils zwei Zeitschlitzen in einem Zeitmultiplexzyklus herstellen.

Jedes ausgesendete Sendesignal (z.B. von der Sendeantenne Tx01) wird von den reihenförmig angeordneten Empfangsantennen 131 ... 139 als eine Vielzahl von Empfangssignalen empfangen. Außerdem wird ein weiteres Empfangssignal durch die zusätzliche Empfangsantenne 410 empfangen, allerdings entspricht dies einer Position 341 in dem virtuellen Array 300, die seitlich in Richtung zu den Sendeantennen Tx01 ... Tx16 verschoben ist. Daher wird bei dem Aussenden eines Sendesignals durch eine nächste Sendeantenne Tx03 die Position 341 erneut erfasst - diesmal entspricht es allerdings der Empfangsantenne 138 in dem physikalischen Antennen-Array, die seitlich neben der zusätzlichen Empfangsantenne 410 angeordnet ist. Die Position 341 in dem virtuellen Array 300 wird somit doppelt erfasst. Da die doppelte Erfassung zu unterschiedlichen Zeiten erfolgt, ergeben sich die genannten "zeitlichen" Brücken.

Ein weiterer Überlapp im virtuellen Array 300 betrifft die virtuellen Antennen 330. Dieser Überlapp kommt durch die Verschiebung der Sendeantennengruppen 110, 120, um einen Wert von jeweils d2/2 nach innen zustande. Diese Verschiebung bewirkt, dass alle virtuellen Antennen 330 doppelt erfasst werden (z.B. in aufeinander folgenden Zeitschlitzen). Beispielsweise entspricht der Empfang des Sendesignals von der ersten Sendeantenne Tx01 durch die letzte Empfangsantenne 139 der virtuellen Antenne 339. Diese virtuelle Antenne 339 entspricht jedoch auch dem Empfang eines weiteren Sendesignals von der zweiten Sendeantenne Tx02 durch die erste Empfangsantenne 131. Somit stellen die zeitlichen Brücken 310, 320 vertikale Verbindungen her, während die Überlappungen 330 horizontale Verbindungen bilden, so dass alle Zeitschlitze miteinander verbunden sind.

Da dieselbe Position im virtuellen Array 300 mehrfach erfasst wird, kann eine Änderung des erfassten Empfangssignals eine relative Bewegung des Objektes anzeigen. Basierend darauf kann eine Bewegungsunschärfe korrigiert werden. Außerdem umfasst in diesem Ausführungsbeispiel das virtuelle Array 300 zusätzliche, überflüssige Empfangsantennen 340, die ebenfalls durch die zusätzliche Empfangsantenne 410 entstehen und bei der Auswertung eliminiert werden können.

Das Ausführungsbeispiel der Fig. 3 ermöglicht daher eine physikalische MIMO-Arraygestaltung mit lückenloser, gleichförmiger virtueller Apertur in zwei Dimensionen und der prinzipiellen Möglichkeit zur Dopplerauswertung (Berücksichtigung relativer Bewegungen zwischen der Antennenanordnung und eines erfassten Objektes) im Falle von Zeitmultiplexbetrieb.

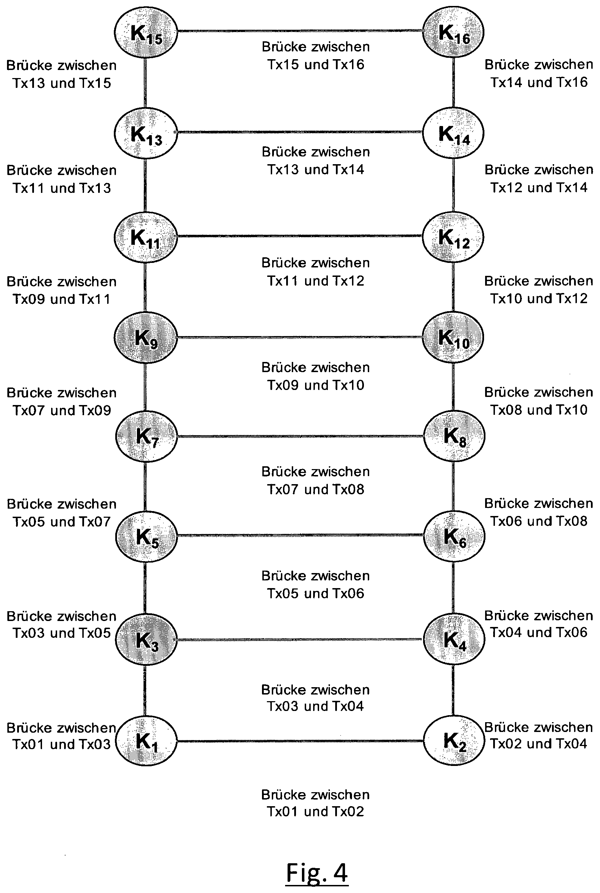

Fig. 4 veranschaulicht die "zeitlichen" Brücken durch einen Graphen. Dabei repräsentiert jeder Knoten $K_n$ einen Zeitschlitz bzw. ein Sendeelement $Tx_n$ (n = 1, ..., T), und die existierenden Zweige repräsentieren die vorhandenen zeitlichen "Brücken" aufgrund der mehrfach erzeugten virtuellen Elemente. Beispielsweise wird zur Zeit K1 ein Sendersignal durch die Sendeantenne Tx01 ausgesendet, welches wie bereits dargelegt, durch die Empfangsantennen 138 und 139 und die zusätzliche Empfangsantenne 410 empfangen wird. Dadurch ergeben sich die beiden Brücken: Tx01 und Tx03 bzw. Tx01 und Tx02. Die Erfassung bzw. Berücksichtigung einer relativen Bewegung (Dopplerverarbeitung) ist erreichbar, wenn im Gesamt-Graph von jedem Knoten $K_n$ (Sendeelement $Tx_n$) über mindestens einen Weg zu jedem anderen Knoten $K_{n'}$ (Sendeelement $Tx_{n'}$, n' ≠ n) gelangt werden kann. Die senkrechten Kanten werden im Beispiel durch das zusätzliche Empfangselement 410 erzeugt und die horizontalen Kanten durch das Verschieben der Sendeantennengruppen. Das Graphen-Framework kann systematisch auf physikalische MIMO-Arrayauslegungen mit lückenloser, gleichförmiger virtueller Apertur in zwei Dimensionen angewendet werden.

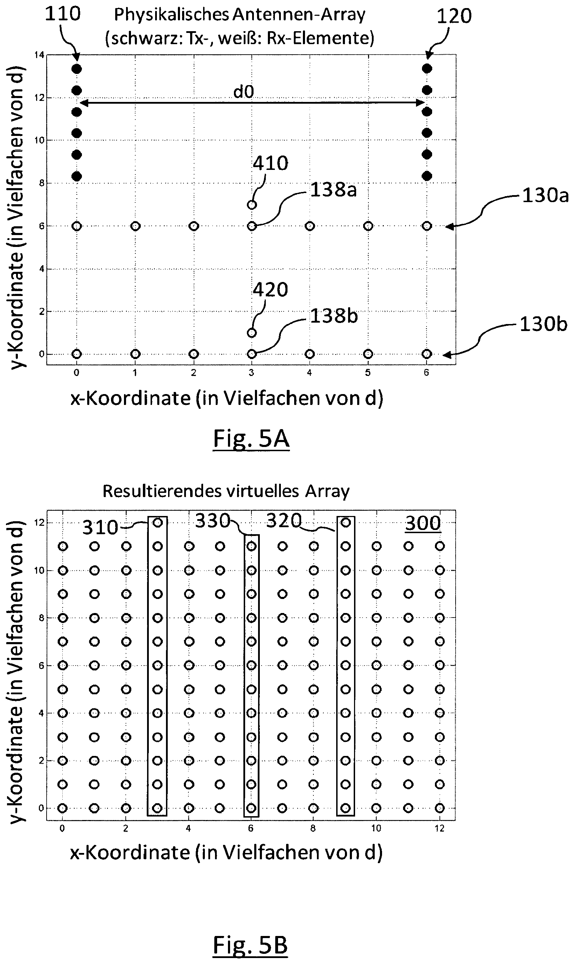

Fig. 5 zeigt ein weiteres Ausführungsbeispiel für das Ausbilden weiterer zusätzlicher Empfangsantennen. In dem gezeigten Ausführungsbeispiel ist basierend auf dem Ausführungsbeispiel der Fig. 2 eine weitere zusätzliche Empfangsantenne 420 seitlich versetzt zu einer der Empfangsantennen der zweiten Gruppe 130b von Empfangsantennen ausgebildet.

Mit der gezeigten Antennenanordnung ist wiederum eine virtuelle Aperturverdopplung in zwei Dimensionen möglich. Die zwei zusätzlichen Empfangselemente 410, 420 wurden entlang der x-Achse an Positionen von zwei Empfangselementen 138a, 138b (die Wahl kann beliebig getroffen werden) ausgebildet. Entlang der y-Achse erhalten sie jeweils eine Verschiebung von maximal d1 bezüglich der ersten Empfangsantennengruppe 130a bzw. der zweiten Empfangsantennengruppe 130b. Des Weiteren werden die beiden Sendeantennengruppen 110, 120 entlang der x-Achse um jeweils d2/2 "nach innen" verschoben, so dass der Abstand d0 zwischen den Sendeantennengruppen 110, 120 maximal (M-1)*d2 ist (optional kann wieder d1=d2=d gesetzt werden).

Der Effekt ist der Gleiche wie in der Fig. 3. Das heißt, auch in diesem Ausführungsbeispiel kommt es zu einem Überlapp von virtuellen Antennen, da in einem bestimmten Zeitraum jeweils zwei virtuelle Antennenpositionen aktiv sind, wobei die so erhaltenen Brücken sich sowohl in die vertikale Richtung erstrecken (durch die zusätzlichen Empfangsantennen 410, 420) als auch in die horizontale Richtung erstrecken, durch den Versatz der Sendeantennengruppen 110, 120.

Im Unterschied zur Fig. 3 ergibt sich aber ein virtuelles Antennenarray 300 mit einer virtuellen Aperturverdopplung in x- und y-Richtung, wobei ein gleichförmiger Elementabstand in beiden Dimensionen (x- und y-Richtung) gewählt werden kann (wenn d1=d2=d). Mehrfach erzeugte virtuelle Elemente, bilden wieder eine zeitliche Brücken zwischen allen Zeitschlitzen des Multiplexzyklus.

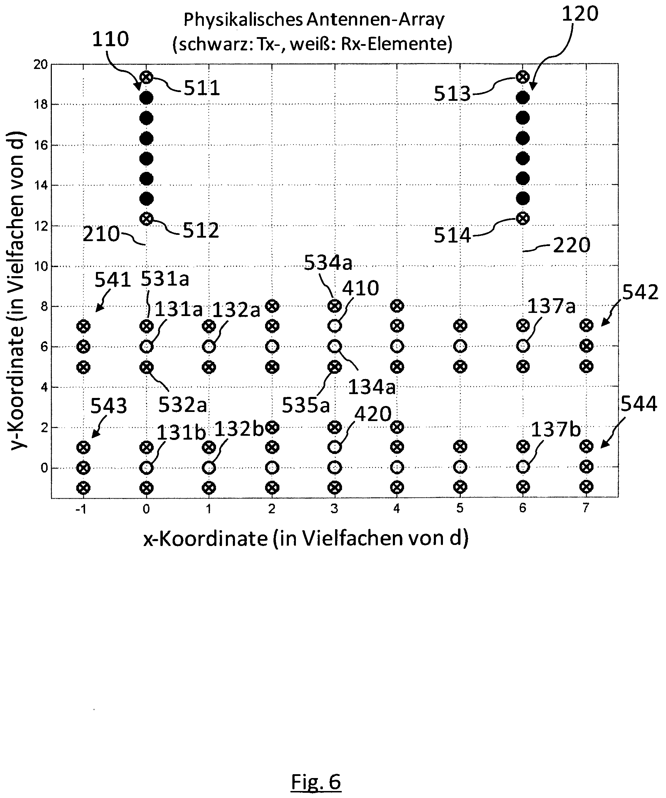

**Fig. 6** zeigt ein weiteres Ausführungsbeispiel, das eine Weiterbildung der Antennenanordnung aus der Fig. 5A darstellt, welches passive Antennenelemente (durchgekreuzte Kreise) aufweist. Diese passiven Antennenelemente können Sender- als auch Empfangsantennen sein, die selbst aktiv weder Signale senden noch empfangen. Um jedoch die Abstrahlcharakteristik der aktiven Sendeantennen zu beeinflussen, werden die aktiven Antennen (z.B. wie sie in den Fig. 1 bis 5 dargestellt sind) jeweils zwischen den passiven Antennenelementen angeordnet. Insbesondere die Antennen an den Enden der reihenförmig angeordneten Antennengruppen (siehe Fig. 1 bis Fig. 5) verhalten sich damit ebenfalls wie innere Antennenelemente und nicht wie Randantennen. Um diesen Effekt zu erreichen, ist es jedoch nicht erforderlich, zwischen zwei benachbarten aktiven Antennen ein passives Antennenelement auszubilden.

Im Detail sind in dem Ausführungsbeispiel der Fig. 6 entlang der ersten Linie 210 ein erstes passives Element 511 und ein zweites passives Element 512 ausgebildet, zwischen denen sich die erste Sendeantennengruppe 110 befindet. Außerdem ist ein drittes passives Antennenelement 513 und ein viertes passives Antennenelement 514 entlang der zweiten Reihe 220 derart ausgebildet, dass die Sendeantennen der zweiten Sendeantennengruppe 120 sich zwischen dem dritten passiven Antennenelement 513 und dem vierten passiven Antennenelemente 514 befinden.

In gleicher Weise können zusätzliche passive Antennenelemente für die erste Empfangsantennengruppe 130a und/oder die zweite Empfangsantennengruppe 130b ausgebildet werden. In dem gezeigten Ausführungsbeispiel umfasst die erste Empfangsantennengruppe 130a eine erste Empfangsantenne 131 a, eine zweite Empfangsantenne 132a, usw., eine siebente Empfangsantenne 137a und die zusätzliche Empfangsantenne 410. Die zweite Empfangsantennengruppe 130b umfasst eine erste Empfangsantenne 131 b, eine zweite Empfangsantenne 132b, usw., eine siebente Empfangsantenne 137b und die weitere zusätzliche Empfangsantenne 420. Entlang der y-Richtung ist jede Empfangsantenne 131a,b ... 137a,b zwischen jeweils zwei passiven Antennenelementen angeordnet. Beispielsweise ist die erste Empfangsantenne 131 a der ersten Empfangsantennengruppe 130a zwischen einem fünften passiven Antennenelement 531 a und einem sechsten passiven Empfangsantennenelement 532a ausgebildet, und die vierte Empfangsantenne 134a und die weitere Zusatzantenne 410 sind zusammen zwischen einem siebten passiven Antennenelement 534a und einem achten passiven Empfangsantennenelement 535a angeordnet.

Optional können ebenfalls entlang der x-Richtung weitere passive Antennenelemente 541, 542, 543, 544 ausgebildet sein, so dass die ersten Empfangsantennengruppe 130a entlang der x-Achse zwischen zumindest zwei weiteren passiven Antennenelementen 541, 542 angeordnet ist. Optional kann die zweite Empfangsantennengruppe 130b entlang der x-Achse seitlich von weiteren passiven Antennenelementen 543, 544 begrenzt sein.

Die vorliegende Erfindung soll nicht auf die dargestellte Anordnung von passiven Antennen eingeschränkt sein. Vielmehr brauchen auch nur ein Teil der passiven Antennen ausgebildet sein. Beispielsweise braucht nur ein Teil der Antennengruppen 110, 120, 130a, 130b sich zwischen oder benachbart zu passiven Antennen befinden. Außerdem brauchen die Antennengruppen 110, 120, 130a, 130b auch nur von einer Seite durch passive Antennenelemente begrenzt zu sein. Welche der passiven Antennen wo am günstigsten anzuordnen ist, kann an die konkreten Gegebenheiten angepasst werden bzw. messtechnisch ermittelt werden.

Mit der dargestellten Antennenanordnung kann ein MIMO-Array mit lückenloser, gleichförmiger virtueller Apertur in zwei Dimensionen erzielt werden, die eine Dopplerauswertung im Falle von Zeitmultiplexbetrieb ermöglicht und bei der passive Antennenelemente zur Optimierung des Antennendiagramms verwendet werden. Um das Antennendiagramm (in Azimut und/oder Elevation) zu optimieren, können die passiven Elemente auf dem Raster $k_m*d$ (in x-Richtung) bzw. $I_n*d$ (in y-Richtung) positioniert werden. Die resultierenden Auswirkungen auf das Antennendiagramm können messtechnisch ermittelt werden und entsprechend berücksichtigt werden.

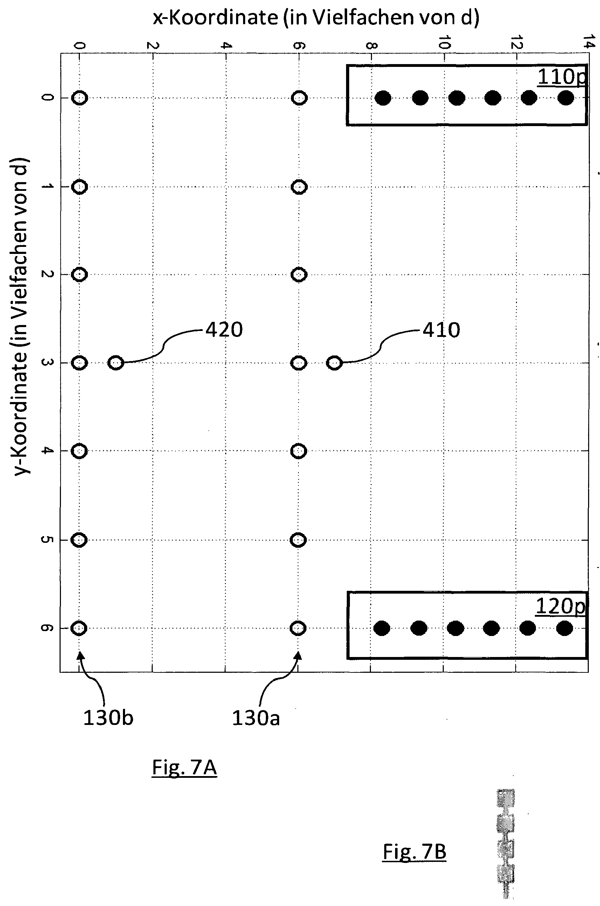

**Fig. 7A** zeigt ein weiteres Ausführungsbeispiel, welches ausgehend von dem Ausführungsbeispiel der Fig. 5 eine weitere optionale Ausgestaltung der Sendeantennen umfasst, um eine sendeseitige Vorfokussierung zu erreichen. In dem gezeigten Ausführungsbeispiel sind die Sendeantennen durch Patch-Antennen ersetzt, die wiederum zu Sendeantennengruppen 110p, 120p zusammengefasst sind. So umfasst die erste Sendeantennengruppe 110p in dem gezeigten Ausführungsbeispiel 6 Patch-Antennen, deren Phasenzentrum sich an jenen Positionen befindet, an denen sich zuvor (siehe Fig. 5) die einzelnen Sendeantennen befunden haben. Gleiches trifft zu für die zweite Sendeantennengruppe 120p, welche in dem gezeigten Ausführungsbeispiel ebenfalls durch 6 Patch-Antennen ersetzt wurde. Auch hier wurden die Patch-Antennen derart angeordnet, dass sich das Phasenzentrum der einzelnen Patch-Antennen an den Positionen befindet, wie es mit der Fig. 5 beschrieben wurde.

Alle zuvor definierten Positions- oder Abstandsangaben sind auch für diese Antennenanordnung gültig, wobei zur Positions- und Abstandsbestimmung die jeweiligen Phasenzentren genutzt werden. Daher können auch für diese sendeseitigen Multipatch-Antennenelementen 110p 120p in Azimut und/oder Elevation die Elementabstände d1, d2 so gewählt werden, wie es im Zusammenhang mit den Figuren 1 und 2 beschrieben wurde, da auch für diese Anordnung die Grating-Lobes in bestimmten Winkelbereichen am Rand des FoV ggf. tolerierbar sind (siehe Beschreibung zu den Figuren 1A,B und 2A,B).

**Fig. 7B** zeigt ein Beispiel für eine Multipatch-Antenne mit einer flächenförmigen Geometrie, wobei eine Vorfokussierung in der vertikalen Längserstreckung der gezeigten Patchantenne erreicht wird. Jeder Punkt in den Patcharrays 110p, 120p aus der Fig. 7A entspricht der in Fig. 7B gezeigten Patchantenne, die sich beispielhaft in y-Richtung erstreckt.

Die Anordnung der Sendeantennengruppen 110p, 120p und der Empfangsantennengruppen 130a, 130b wurde im Vergleich zu der Antennenanordnung aus Fig. 5A um 90° gedreht. Dies bietet den folgenden Vorteil. Das Patch-Array nimmt in der Richtung, in der vorfokussiert werden soll, physikalisch eine größere Fläche ein (z.B. die vierfache; siehe Fig. 7B). In Fig. 7A wäre dies die y-Richtung. Die Vorfokussierung wird typischerweise nur sendeseitig genutzt, da man dann einen entsprechenden Antennengewinn und somit eine Signal-zu-Rauschleistungs (SNR)-Verbesserung erzielen kann. Häufig ist eine Vorfokussierung in y-Richtung wünschenswert. Dies würde jedoch für die Antennenanordnung aus der Fig. 5A dazu führen, dass die einzelnen Sendeantennen weiter auseinander anzuordnen wären.

Damit wäre der vorteilhafte $\lambda/2$-Abstand im resultierenden virtuellen Array kaum einzuhalten. Da jedoch die Sendeantennen in der Fig. 7A in x-Richtung angeordnet sind, lässt sich dies in der Praxis problemlos umsetzen.

Somit erlaubt die Antennenanordnung aus der Fig. 7A ein physikalisches MIMO-Array mit lückenloser, gleichförmiger virtueller Apertur in zwei Dimensionen, das eine Dopplerauswertung im Falle von Zeitmultiplexbetrieb ermöglicht. Durch die Verwendung von Multipatch-Elementen wird eine sendeseitige Vorfokussierung des Antennendiagramms erreicht. Dazu können die Phasenzentren der Multipatch-Elemente auf dem Raster $k_m*d$ (in x-Richtung) bzw. $I_n*d$ (in y-Richtung) liegen. Die resultierenden Auswirkungen auf das Antennendiagramm können messtechnisch ermittelt werden und bei der Ausrichtung berücksichtigt werden.

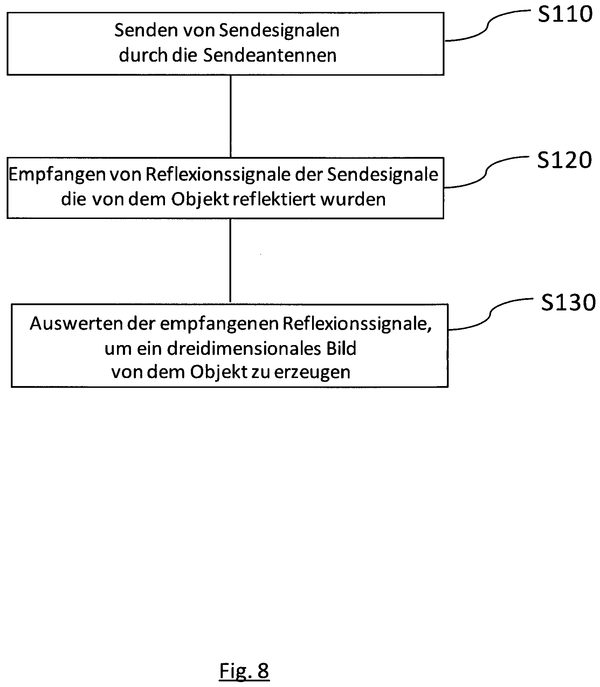

**Fig. 8** zeigt ein Flussdiagramm für ein Verfahren zur dreidimensionalen Radarbildgebung für ein Objekt unter Nutzung einer Antennenanordnung nach einem der vorhergehenden Ansprüche. Das Verfahren umfasst die folgenden Schritte: Senden S110 von (orthogonalen) Sendesignalen durch die Sendeantennen; Empfangen S120 von Reflexionssignalen der (orthogonalen) Sendesignale, die von dem Objekt reflektiert wurden; und Auswerten S130 der empfangenen Reflexionssignale, um ein dreidimensionales Bild von dem Objekt zu erzeugen.

Alle zuvor beschriebenen Funktionen der Antennenanordnung können als weitere optionale Verfahrensschritte in dem Verfahren umgesetzt sein.

Das Verfahren kann auch auf ein Steuergerät (beispielsweise einer Radaranlage) in Form von Software implementiert sein, die es ermöglicht, die Radaranlage zu steuern. Weitere Ausführungsbeispiele umfassen daher auch ein Speichermedium mit einem darauf gespeicherten Computerprogramm, welches ausgebildet ist, um eine Vorrichtung zu veranlassen, das zuvor beschriebene Verfahren auszuführen, wenn es auf einem Prozessor (Verarbeitungseinheit) läuft. Das Speichermedium kann ein maschinenlesbares Medium sein, das einen Mechanismus zum Speichern oder Übertragen von Daten in einer von einer Maschine (z.B. einem Computer) lesbaren Form beinhalten. Die Vorrichtung kann beispielsweise ein Steuermodul mit einem Prozessor sein, auf welchem das Computerprogramm läuft.

Im Gegensatz zu den eingangs beschriebenen konventionellen Antennenanordnungen können Ausführungsbeispiele der vorliegenden Erfindung gleichzeitig die folgenden Vorteile erzielen:

(a) eine eindeutige Winkeldarstellung für Scanwinkel +/- 90° in Azimut und Elevation,

(b) ein lückenloses, gleichförmiges virtuelles Antennenarray in Azimut und Elevation,

(c) einen hohen Entkopplungsgrad zwischen Sende- und Empfangsantennen-Elementen,

(d) die prinzipielle Möglichkeit zur Dopplerauswertung mittels redundanter virtueller Antennen-Elemente.

In Abgrenzung zu den bekannten Antennenarrays, erlauben Ausführungsbeispiele eine Aperturerweiterung in zwei Dimensionen, verbessern das erreichbare Antennendiagramm durch die Nutzung von passiven Antennenelementen und erlauben eine Vorfokussierung.

Die in der Beschreibung, den Ansprüchen und den Figuren offenbarten Merkmale der Erfindung können sowohl einzeln als auch in beliebiger Kombination für die Verwirklichung der Erfindung wesentlich sein.

Bezugszeichenliste

| | |
|---|---|
| 110 | erste Sendeantennengruppe |
| 110p | erste Patch-Sendeantennengruppe |
| 120 | zweite Sendeantennengruppe |
| 120p | zweite Patch-Antennengruppe |
| 130,130a,b | Empfangsantennengruppen |
| 210 | erste Linie |
| 220 | zweite Linie |
| 230 | dritte Linie |
| 240 | vierte Linie |
| 300 | virtuelle Arrays (von Antennen) |
| 310, 320 | virtuelle Antennen zu zeitlichen Brücken |
| 330 | überlappende virtuelle Antennen |
| 340 | überflüssige virtuelle Antennen |
| 390 | konventionelles virtuelles Antennenarray |
| 391, 392... | Quadranten des konventionellen virtuellen Arrays |
| 410, 420 | zusätzliche Empfangsantenne |
| 511,512, ... | passive Antenne |
| 905 | konventionelles Standardarray |
| 907 | konventionelles MIMO-Array |
| 910,920 | konventionelle Sendeantennengruppen |
| 940, 930 | konventionelle Empfangsantennengruppen |
| 950 | Freiraum |
| d0 | Sendeantennengruppenabstand |
| d1 | (maximaler) Senderabstand |
| d2 | (maximaler) Empfängerabstand |
| d3 | Mindestabstand |
| d4 | Empfangsantennengruppenabstand |
| Tx | Sendeantennen |
| Rx | Empfangsantennen |

**Patentansprüche**

1. MIMO-Antennenanordnung für eine dreidimensionale Radarbildgebung, mit:

   einer ersten Sendeantennengruppe (110) mit zumindest N Sendeantennen, die entlang einer ersten Linie (210) gleichförmig mit einem maximalen Senderabstand (d1) aufgereiht sind;

   einer zweiten Sendeantennengruppe (120) mit zumindest N Sendeantennen, die entlang einer zweiten Linie (220) gleichförmig mit dem maximalen Senderabstand (d1) aufgereiht sind; und einer Empfangsantennengruppe (130) mit M Empfangsantennen, die entlang zumindest einer dritten Linie (230) gleichförmig mit einem maximalen Empfängerabstand (d2) aufgereiht sind,

   wobei zwischen den Empfangsantennen und den Sendeantennen der ersten Sendeantennengruppe (110) ein Mindestabstand (d3) entlang der ersten Linie (210) ausgebildet ist, und wobei zwischen den Empfangsantennen und den Sendeantennen der zweiten Sendeantennengruppe (120) der Mindestabstand (d3) entlang der zweiten Linie (220) ausgebildet ist.

2. MIMO-Antennenanordnung nach Anspruch 1, die weiter eine Steuereinheit umfasst, wobei die Steuereinheit ausgebildet ist, um die Sendeantennen über ein Multiplexverfahren anzusteuern und die Empfangsantennen ausgebildet sind, um Sendesignale von allen Sendeantennen oder deren Reflexionen an einem Objekt zu empfangen.

3. MIMO-Antennenanordnung nach Anspruch 1 oder Anspruch 2, wobei die Sendeantennen ausgebildet sind, um Sendesignale mit einer Wellenlänge $\lambda$ zu senden und der maximale Senderabstand (d1) und/oder der maximale Empfängerabstand (d2) einen Wert von maximal $\lambda/2$ aufweisen oder der Wert in einem Bereich zwischen $\lambda/2$ bis $\lambda$ liegt, wobei der Wert bis auf eine Fehlertoleranz von $\pm$ 30% bestimmt ist.

4. MIMO-Antennenanordnung nach einem der vorhergehenden Ansprüche, wobei unter Nutzung eines Koordinatensystems mit einer x-Achse und einer y-Achse, die orthogonal aufeinander stehen, die erste Linie (210) und die zweite Linie (220) im Wesentlichen parallel zur y-Achse und die dritte Linie (230) im Wesentlichen parallel zu x-Achse verlaufen, so dass alle Sendeantennen jeweilige y-Werte aufweisen, die um den Mindestabstand (d3) größer sind als der y-Wert der Empfangsantennen.

5. MIMO-Antennenanordnung nach einem der vorhergehenden Ansprüche, wobei die Empfangsantennengruppe (130) eine erste Empfangsantennengruppe (130a) ist und die MIMO-Antennenanordnung außerdem eine zweite Empfangsantennengruppe (130b) mit zumindest M weiteren Empfangsantennen, die entlang einer vierten (240) Linie aufgereiht sind, aufweist, wobei die zweite Empfangsantennengruppe (130b) im Wesentlichen parallel zur ersten Empfangsantennengruppe (130a) in einem Empfangsantennengruppenabstand (d4) von maximal N*d1 verläuft.

**6.** MIMO-Antennenanordnung nach einem der vorhergehenden Ansprüche,
wobei die erste Sendeantennengruppe (110) parallel zur zweiten Sendeantennengruppe (120) in einem Sendeantennengruppenabstand (d0) von maximal M*d2 verläuft, und
wobei ein Abstand (dm), gemessen parallel zur dritten Linie (230), von der ersten Linie (210) zu einer m-ten Empfangsantenne maximal $(k_m+1/2)*d2$ ist, wobei $k_m$ eine für die m-te Empfangsantenne spezifische ganze Zahl ist.

**7.** MIMO-Antennenanordnung nach einem der vorhergehenden Ansprüche, wobei ein Abstand (dn), gemessen parallel zur ersten oder zur zweiten Linie (210, 220), von der dritten Linie (230) zu einer n-ten Sendeantenne maximal $(l_n+1/2)*d1$ ist, wobei $l_n$ eine für die n-te Sendeantenne spezifische ganze Zahl ist.

**8.** MIMO-Antennenanordnung nach einem der vorhergehenden Ansprüche, die weiter
zumindest eine zusätzliche Empfangsantenne (410, 420) aufweist, die mit dem maximalen Senderabstand (d1) seitlich neben einer der Empfangsantennen (138) angeordnet ist,
wobei die erste Sendeantennengruppe (110) parallel zur zweiten Sendeantennengruppe (120) in einem Sendeantennengruppenabstand (d0) von maximal (M-1)*d2 verläuft.

**9.** MIMO-Antennenanordnung nach Anspruch 8, soweit rückbezogen auf Anspruch 2, wobei die Steuereinheit ausgebildet ist, um ein Zeitmultiplexverfahren zum Aussenden der Sendesignale zu nutzen und basierend auf Empfangssignalen von der zumindest einen zusätzlichen Empfangsantenne (410, 420), eine Bewegung des Objektes festzustellen, um eine Bewegungskompensation zu ermöglichen.

**10.** MIMO-Antennenanordnung nach einem der vorhergehenden Ansprüche, die weiter eine oder mehrere passive Antennenelemente aufweist, die seitlich neben einer der Sendeantennen mit dem maximalen Senderabstand (d1) oder seitlich neben einer der Empfangsantennen mit dem maximalen Empfängerabstand (d2) angeordnet ist/sind.

**11.** MIMO-Antennenanordnung nach Anspruch 10,
wobei jede Sendeantenne entlang der ersten Linie (210) und entlang der zweiten Linie (220) zwischen zwei passiven Antennenelementen (511, 512; 521, 522) angeordnet ist, und
wobei jede Empfangsantenne entlang der dritten Linie (230) und entlang der ersten und zweiten Linie (210, 220) zwischen zwei passiven Antennenelementen (532; 531, 551; 541, 561) angeordnet ist.

**12.** MIMO-Antennenanordnung nach einem der vorhergehenden Ansprüche, wobei die Sendeantennen der ersten Sendeantennengruppe (110) und/oder der zweiten Sendeantennengruppe (120) als Patch-Antennen mit einem jeweiligen Phasenzentrum ausgebildet sind, wobei Phasenzentren der jeweiligen Patch-Antennen sich an Positionen der Sendeantennen befinden.

**13.** MIMO-Antennenanordnung nach einem der vorhergehenden Ansprüche, wobei zwischen der ersten Sendeantennengruppe (110) und der Empfangsantennengruppe (130) und/oder zwischen der zweiten Sendeantennengruppe (120) und der Empfangsantennengruppe (130) ein Abschirmelement ausgebildet ist, um ein direktes Empfangen der durch die Sendeantennen ausgestrahlten Signale durch die Empfangsantennen zu verhindern.

**14.** Verfahren zur dreidimensionalen Radarbildgebung für ein Objekt unter Nutzung einer MIMO-Antennenanordnung nach einem der vorhergehenden Ansprüche, mit folgenden Schritten:

Senden (S110) von Sendesignalen durch die Sendeantennen;
Empfangen (S120) von Reflexionssignale der Sendesignale, die von dem Objekt reflektiert wurden; und
Auswerten (S130) der empfangenen Reflexionssignale, um ein dreidimensionales Bild von dem Objekt zu erzeugen.

**15.** Computerprogrammprodukt mit darauf gespeichertem Software-Code oder eine anwendungsspezifische Hardware, insbesondere eine FPGA-Einheit, der/die ausgebildet ist, um das Verfahren nach Anspruch 14 auszuführen, wenn der Software-Code durch eine Verarbeitungseinheit, die an die MIMO-Antennenanordnung nach Anspruch 1 koppelt, ausgeführt wird, oder wenn die anwendungsspezifische Hardware an die MIMO-Antennenanordnung nach Anspruch 1 koppelt.

Physikalisches Antennen-Array
(schwarz: Tx-, weiß: Rx-Elemente)

Fig. 1A

Resultierendes virtuelles Array

Fig. 1B

Fig. 2A

Fig. 2B

Fig. 3A

Fig. 3B

K₁₅ ——— Brücke zwischen Tx15 und Tx16 ——— K₁₆

Brücke zwischen Tx13 und Tx15

Brücke zwischen Tx14 und Tx16

K₁₃ ——— Brücke zwischen Tx13 und Tx14 ——— K₁₄

Brücke zwischen Tx11 und Tx13

Brücke zwischen Tx12 und Tx14

K₁₁ ——— Brücke zwischen Tx11 und Tx12 ——— K₁₂

Brücke zwischen Tx09 und Tx11

Brücke zwischen Tx10 und Tx12

K₉ ——— Brücke zwischen Tx09 und Tx10 ——— K₁₀

Brücke zwischen Tx07 und Tx09

Brücke zwischen Tx08 und Tx10

K₇ ——— Brücke zwischen Tx07 und Tx08 ——— K₈

Brücke zwischen Tx05 und Tx07

Brücke zwischen Tx06 und Tx08

K₅ ——— Brücke zwischen Tx05 und Tx06 ——— K₆

Brücke zwischen Tx03 und Tx05

Brücke zwischen Tx04 und Tx06

K₃ ——— Brücke zwischen Tx03 und Tx04 ——— K₄

Brücke zwischen Tx01 und Tx03

Brücke zwischen Tx02 und Tx04

K₁ ——— Brücke zwischen Tx01 und Tx02 ——— K₂

Fig. 4

Physikalisches Antennen-Array
(schwarz: Tx-, weiß: Rx-Elemente)

Fig. 5A

Resultierendes virtuelles Array

Fig. 5B

Physikalisches Antennen-Array
(schwarz: Tx-, weiß: Rx-Elemente)

Fig. 6

x-Koordinate (in Vielfachen von d)

y-Koordinate (in Vielfachen von d)

110p

420

410

120p

130b        130a

Fig. 7A

Fig. 7B

Senden von Sendesignalen
durch die Sendeantennen

S110

Empfangen von Reflexionssignale der Sendesignale
die von dem Objekt reflektiert wurden

S120

Auswerten der empfangenen Reflexionssignale,
um ein dreidimensionales Bild
von dem Objekt zu erzeugen

S130

Fig. 8

Fig. 9

**Europäisches Patentamt**
**European Patent Office**
**Office européen des brevets**

# EUROPÄISCHER RECHERCHENBERICHT

Nummer der Anmeldung

EP 16 00 1077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 083756 A1 (SIEMENS AG [DE]) 4. April 2013 (2013-04-04) * das ganze Dokument * ----- | 1-15 | INV. G01S13/87 G01S13/89 H01Q21/06 |
| X | US 2010/220001 A1 (LONGSTAFF IAN DENNIS [AU]) 2. September 2010 (2010-09-02) * Absätze [0072], [0083], [0102] - Absätze [0106], [0111], [0112], [0142]; Ansprüche 10, 11; Abbildung 1 * ----- | 1-15 | |
| X | DE 10 2013 105809 A1 (AIRBUS DEFENCE & SPACE GMBH [DE]) 11. Dezember 2014 (2014-12-11) * Spalte 41 - Absätze 45, 49, 54, 60, 68; Abbildungen 2, 4, 10 * ----- | 1-15 | |
| X | CN 102 866 401 B (UNIV NORTHWESTERN POLYTECHNIC) 12. März 2014 (2014-03-12) * Abbildungen 5,9 * ----- | 1-15 | |
| X | DE 10 2013 220131 A1 (ROHDE & SCHWARZ [DE]; FRIEDRICH ALEXANDER UNIVERSITÄT ERLANGEN NÜRNBER) 9. April 2015 (2015-04-09) * Absätze [0011], [0045] - Absätze [0051], [0064] - [0069]; Abbildungen 2,5 * ----- | 1-15 | RECHERCHIERTE SACHGEBIETE (IPC) G01S H01Q |
| X | GB 2 510 969 A (ROHDE & SCHWARZ [DE]) 20. August 2014 (2014-08-20) * Abbildungen 1a,2 * ----- -/-- | 1-15 | |

Der vorliegende Recherchenbericht wurde für alle Patentansprüche erstellt

| Recherchenort | Abschlußdatum der Recherche | Prüfer |
|---|---|---|
| München | 14. Oktober 2016 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 16 00 1077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YUAN SHUAI ET AL: "110-140-GHz single-chip reconfigurable radar frontend with on-chip antenna", 2015 IEEE BIPOLAR/BICMOS CIRCUITS AND TECHNOLOGY MEETING - BCTM, IEEE, 26. Oktober 2015 (2015-10-26), Seiten 48-51, XP032821604, DOI: 10.1109/BCTM.2015.7340553 * Sek. I, II; Abbildung 1b * | 1-11, 13-15 | |
| A,D | SCHMID C M ET AL: "Motion compensation and efficient array design for TDMA FMCW MIMO radar systems", 2012 6TH EUROPEAN CONFERENCE ON ANTENNAS AND PROPAGATION (EUCAP), 26. März 2012 (2012-03-26), - 30. März 2012 (2012-03-30), Seiten 1746-1750, XP002762927, IEEE Piscataway, NJ, USA ISSN: 2164-3342, DOI: 10.1109/EUCAP.2012.6206605 ISBN: 978-1-4577-0918-0 * das ganze Dokument * | 9 | |
| A | BROOKNER ELI: "MIMO radar demystified and where it makes sense to use", 2013 IEEE INTERNATIONAL SYMPOSIUM ON PHASED ARRAY SYSTEMS AND TECHNOLOGY, IEEE, 15. Oktober 2013 (2013-10-15), Seiten 399-407, XP032562863, DOI: 10.1109/ARRAY.2013.6731862 * Seite 403, Spalte 2, Zeile 4 - Zeile 13 * | 10,11 | |
| A | EP 2 857 858 A1 (HONEYWELL INT INC [US]) 8. April 2015 (2015-04-08) * Abbildungen 3,13 * | 13 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 14. Oktober 2016 | Rudolf, Hans |

Seite 2 von 2

**ANHANG ZUM EUROPÄISCHEN RECHERCHENBERICHT**
**ÜBER DIE EUROPÄISCHE PATENTANMELDUNG NR.**

EP 16 00 1077

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2016

| Im Recherchenbericht angeführtes Patentdokument | Datum der Veröffentlichung | Mitglied(er) der Patentfamilie | Datum der Veröffentlichung |
|---|---|---|---|
| DE 102011083756 A1 | 04-04-2013 | DE 102011083756 A1<br>WO 2013045232 A1 | 04-04-2013<br>04-04-2013 |
| US 2010220001 A1 | 02-09-2010 | AU 2008301226 A1<br>EP 2191292 A1<br>IL 204164 A<br>US 2010220001 A1<br>WO 2009036507 A1 | 26-03-2009<br>02-06-2010<br>30-04-2014<br>02-09-2010<br>26-03-2009 |
| DE 102013105809 A1 | 11-12-2014 | DE 102013105809 A1<br>EP 3004923 A1<br>KR 20160018519 A<br>US 2016131738 A1<br>WO 2014194877 A1 | 11-12-2014<br>13-04-2016<br>17-02-2016<br>12-05-2016<br>11-12-2014 |
| CN 102866401 B | 12-03-2014 | KEINE | |
| DE 102013220131 A1 | 09-04-2015 | KEINE | |
| GB 2510969 A | 20-08-2014 | KEINE | |
| EP 2857858 A1 | 08-04-2015 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8570210 B1

**In der Beschreibung aufgeführte Nicht-Patentliteratur**

- **PRECHTEL, U. ; MEENAKSHISUNDARAM, V. ; SCHOENLINNER, B. ; ZIEGLER, V ; FELDLE, H.-P. ; MEUSLING, A.** Short-Range MIMO Radar System Considerations. *Antennas and Propagation (EUCAP), 2012 6th European Conference,* 1742-1745

- **SPRENG, T. ; PRECHTEL, U. ; SCHONLINNER, B. ; ZIEGLER, V. ; MEUSLING, A ; SIART, U.** UWB Near-Field MIMO Radar. *Calibration, Measurements and Image Reconstruction, Radar Conference (EuRAD), 2013 European,* 33-36
- **SCHMID, C.M. ; FEGER, R. ; PFEFFER, C. ; STELZER, A.** Motion Compensation and Efficient Array Design for TDMA FMCW MIMO Radar Systems. *Antennas and Propagation (EUCAP),* 1746-1750